Europäisches Patentamt

European Patent Office

Office européen des brevets

(19)

(11) Publication number: **0 234 233 B1**

(12) **EUROPEAN PATENT SPECIFICATION**

(45) Date of publication of patent specification: **15.04.92** (51) Int. Cl.⁵: **G02B 6/22**, G02B 6/16

(21) Application number: **87100528.6**

(22) Date of filing: **16.01.87**

Divisional application 90124761.9 filed on 16/01/87.

(54) **High power optical fiber.**

(30) Priority: **18.01.86 JP 8479/86**
**23.01.86 JP 12487/86**
**02.10.86 JP 235086/86**
**03.10.86 JP 235755/86**
**08.10.86 JP 239996/86**

(43) Date of publication of application:
**02.09.87 Bulletin 87/36**

(45) Publication of the grant of the patent:
**15.04.92 Bulletin 92/16**

(84) Designated Contracting States:
**DE FR GB NL**

(56) References cited:
**EP-A- 0 056 996**
**EP-A- 0 149 306**
**EP-A- 0 195 630**
**US-A- 4 139 262**

**PATENT ABSTRACTS OF JPAN, vol. 9, no. 90
(P-350)[1813], 19th April 1985 & JP-A-59-218
405**

(73) Proprietor: **SUMITOMO ELECTRIC INDUSTRIES
LIMITED**
**No. 15, Kitahama 5-chome, Higashi-ku
Osaka-shi, Osaka 541(JP)**

(72) Inventor: **Yoshida, Noriyuki c/o Osaka Works
Sumimoto Electric Ind. Ltd. 1-3, Shimaya
1-chome**
**Konohana-ku Osaka-shi Osaka(JP)**
Inventor: **Takahashi, Kenichi c/o Osaka Works
Sumimoto Electric Ind. Ltd. 1-3, Shimaya
1-chome**
**Konohana-ku Osaka-shi Osaka(JP)**

(74) Representative: **Patentanwälte Grünecker,
Kinkeldey, Stockmair & Partner
Maximilianstrasse 58
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to an optical fiber for transmitting infrared light with low loss.

The present invention also relates to an infrared-ray optical fiber with high mechanical stability and low transmission loss.

Carbon dioxide laser light has been used for various purposes in the fields of industrial processing and medicine because it can generate high power.

The $CO_2$ laser light has been led to an object through a combination of mirrors or the like in order to prevent the light power from being attenuated. However, revolute mirrors are inconvenient to handle and difficult to use. The desire has increased to use a flexible optical fiber as a transmission line of the $CO_2$ laser. However, optical fibers such as silica glass fibers can not be used for transmitting the carbon dioxide laser light, because the wavelength of the light has a large value of l0.6 $\mu$m.

Recently, optical fibers for transmitting infrared light with low loss have been developed. Such infrared light fibers are roughly classified into the two groups of crystal fibers and glass fibers. The group of crystal fibers includes those made of thallium halides (for example TlBr, TlI, TlCl, and mixed crystals thereof), those made of alkali halides (for example, CsI, CsBr, KBr, etc.), and those made of silver halides (for example, AgBr, AgI, AgCl, and mixed crystals thereof). The group of glass fibers includes those made of chalcogenide glass mainly containing Ge-S, Ge-Se, As-S, As-Se or the like.

Silica glass fibers for visible light or near infrared light have the property of low loss and are easy to manufacture and convenient to prepare in long size. However, the above infrared-ray optical fibers capable of trasmitting $CO_2$ laser light disadvantageously have a high absorption property and, compared with the silica glass fibers, are difficult to manufacture in small diameter and long length.

Because $CO_2$ laser light is used for its light power and because it is unnecessary in many cases to transmit the light power over a long distance, flexible infrared-ray optical fibers may be useful even if they are short in length. Even if the fibers are about one meter in length, the optical fibers are useful.

The carbon dioxide laser light is stronger in light power compared with other laser light and oscillates continuously. Accordingly, the absolute quantity of power traveling through the fiber is very large. Accordingly, a problem exists in that the fiber is intensively heated and is injured even if a little absorption occurs at the fiber.

In the case of a silica optical fiber or the like for guiding visible light or near infrared light, the optical fiber generally has a double structure of a high refractive core and a low refractive cladding formed around the core.

If the difference in refractive index between the clad and the core is very large, many modes of light are undesirably propagated. The advantage of the silica glass fibers exists in that the condition of propagation is not disturbed by external conditions because of the presence of the cladding. In the case of infrared-ray optical fiber, it is difficult to obtain a proper cladding material corresonding to a core material.

Although it has been described above that crystal fibers made of thallium halide, alkali halide or silver halide have been developed as infrared-ray optical fibers, most of those crystal fibers have a single structure of a core formed of such a material. In other words, most of those crystal fibers have no cladding but only air functioning as a cladding.

Fig. l shows such a fiber having nothing but a core l. Because it is considered that air forms a cladding, such a structure is often called "air clad structure". That is, the air forms a cladding with a refractive index of l.

In this drawing, the silver bromide core l (refractive index: 2.2) is surrounded by air (refractive index: l). Because the air efficiently transmits infrared light and is low in refractive index, the air functions as a cladding.

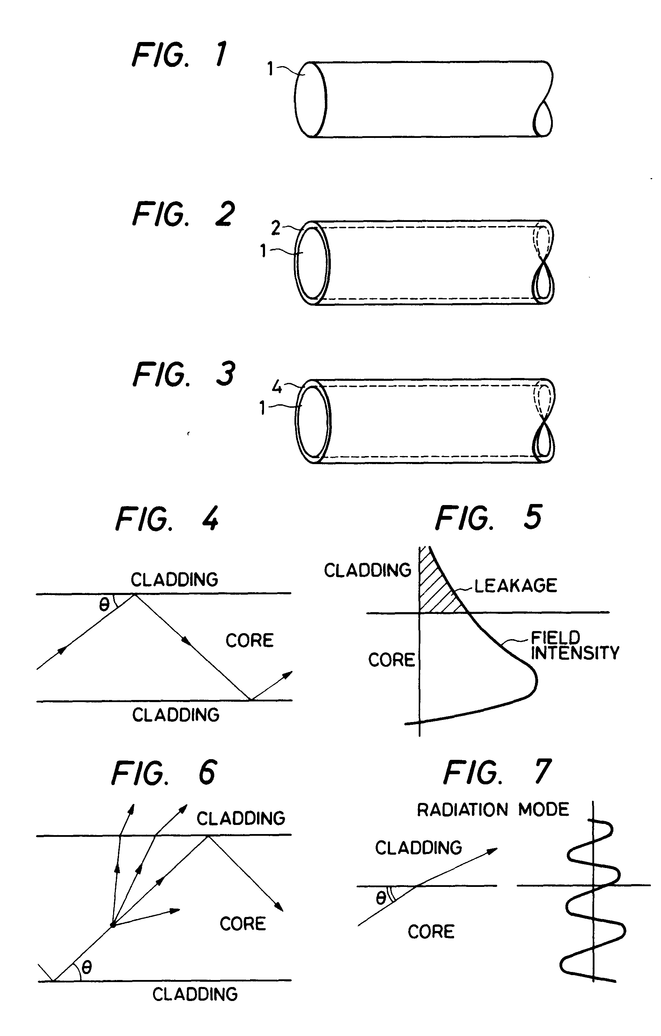

As shown in Fig. 2, an infrared material lower in refractive index than the core material has alternatively been used as a cladding 2.

In this example, the core l is made of silver bromide (AgBr). Its refractive index is 2.2 with respect to carbon dioxide laser light. The cladding 2 is made of silver chloride (AgCl). Its refractive index is l.98 with respect to the same light. The term "refractive index" used in this description means a refractive index with respect to the wavelength of carbon dioxide laser light. Furthermore, as shown in Fig. 3, a resin 4 has been used as a cladding to coat the core for guiding infrared light. In this example, the core l is made of silver bromide (AgBr, refractive index: 2.2), and the cladding resin 4 is made of polyethylene (refractive index: l.92). Its refractive index is 2.2 with respect to carbon dioxide laser light. The different point from Fig. 2 is that polyethylene (a resin) does not sufficiently transmit infrared light. That is, polyethylene is a highly absorbing material. Other resins have also been used to be substituted for polyethylene.

However, serious problems occur when the above-described optical fibers are used to transmit high power carbon dioxide laser light. The fiber having an air clad structure as shown in Fig. I or having a double structure of an AgBr core I and an AgCl cladding 2 as shown in Fig. 2 has such a defect as follows. When this fiber is not in contact with any support, this fiber can transmit relatively high power light. However, when the fiber is supported by a certain support, the quantity of power which can be transmitted is greatly reduced. If higher power is transmitted, the fiber is heated at the portion contacting with the support and is instantly fused.

Because the fiber should always be supported in practical use, the fiber is always in contact with a certain support. Accordingly, the fiber cannot transmit high power light in order to avoid fusing at the contact portion.

With respect to the fiber having a double structure of an AgBr core I and a polyethylene cladding 4, as shown in Fig. 3, the polyethylene cladding 4 is rapidly heated by laser light so as to be melted. Then, the fiber core is melted so that the fiber is fused.

Accordingly, the fiber can transmit only very low power light even if the fiber is not in contact with the support.

The cause of such problems can be estimated from the consideration of the optical fiber with respect to the distribution of electromagnetic field in the mode of a propagating light wave.

One mode of light within the optical fiber is the light mode that progapates owing to the total reflection at the interface between the core and the cladding within the fiber as shown in Fig. 4. If the angle $\theta$ between the light wave and the interface is not larger than the critical angle, light is totally reflected.

Although no electromagnetic field can exist in the cladding region in view of geometrical optics, it can exist therein when wave optics are taken into account. Even in the case where light is totally reflected, an electromagnetic field is practically tailing into the clad portion as shown in Fig. 5. The tailing in itself does not cause energy loss. The mode of light guided in the core with the tailing is called a guided mode.

Otherwise, when light rays within the core are scattered by a certain factor of light scattering as shown in Fig. 6, light components having various propagating directions $\theta$ are produced. Because the propagating direction $\theta$ of a part of light exceeds the critical angle, the light is not totally reflected but partially passes through the core/cladding interface toward the cladding. This condition is shown in Fig. 7.

The mode of light passing toward the cladding is called a radiation mode. Because at least one peak exists at the cladding, power is moved to the cladding whereafter the power escapes from the core.

As described above, there exist an electromagnetic field tailing into the cladding region (in the guided mode) and an electromagnetic wave propagating to the cladding region deviating from the condition of the total reflection (in the radiation mode).

In the case of the air clad structure of Fig. I, the electromagnetic field and the electromagnetic wave are absorbed by a certain support having large light absorbency to thereby produce heat. Thus the fiber is soon fused.

In the case of the polyethylene clad structure of Fig. 3, the electromagnetic field is absorbed by the polyethylene layer having large light absorbency and is converted into heat energy to thereby cause heating and fusing of the fiber.

In the case of the AgBr core and the AgCl cladding of Fig. 2, the tailing of the electromagnetic field into the AgCl clad may be disregarded. However, there exists an electromagnetic field tailing to the surface of the AgCl cladding. Furthermore, an electromagnetic wave escapes from the surface of the cladding (radiation mode). These are absorbed by a support member being in contact with the surface of the cladding and are converted into heat energy to thereby produce heat. Thus, the fiber is fused.

It is understood from the above description that the three kinds of infrared optical fibers having different cladding structures as shown in Figs. I to 3 are not satisfactory for transmitting strong carbon dioxide laser light.

In the above-described investigation, it is essential that optical fibers for transmitting high-power carbon dioxide laser light have a structure of completely cutting off the "leakage" of an electromagnetic field from the surface of the fiber.

The optical fibers with no cladding are disadvantageous in that the condition of light transmission is apt to be influenced by surface conditions of the fibers because the core of the fibers are directly exposed.

In order to eliminate the disadvantage of a resin coated air-clad fiber, it has been proposed that the infrared optical fibers are coated with a metal film to thereby protect the optical fibers and prevent the leakage or scattering of infrared light out of the surface.

For example, such an infrared optical fiber coated with a metal film has been proposed in Japanese Patent Unexamined Publication No. I3230I/56 (laid open October, 26, I98I). The proposal is that the outer surface of the optical fiber core is coated with gold by vacuum vapor deposition. Because gold having a high reflectivity for infrared light is deposited by evaporation, infrared light is reflected by gold so that it can not leak out.

It is, however, difficult for gold to be uniformly deposited on the outer surface of a small-diameter fiber by evaporation. Accordingly, the fiber cannot be coated with gold to a sufficient thickness in order to not wastefully consume much gold. It is considered that the thickness is limited to the order of from I $\mu$m to I0 $\mu$m and that the thickness in many cases is about I $\mu$m. There exists a disadvantage that it is impossible to completely reflect strong $CO_2$ laser light to thereby enclose it within the fiber because of the insufficient thickness.

It is considered that a gold outer layer having a thickness of about I0 $\mu$m increases infrared light containment.

If the thickness of gold is increased to eliminate the disadvantage, much gold is required so that the fiber becomes expensive. Furthermore, because part of the light is not reflected by gold and is absorbed by the gold, the gold layer is greatly heated. Accordingly, the fiber cannot transmit strong light. Such a gold film as this should not be called a cladding. The term "cladding" should be used for material, similar to the core, through which light can be well transmitted and which material does not absorb the light.

A method of forming a metal reflecting layer on the outer surface of an infrared-ray optical fiber made of glass has been proposed in Japanese Patent Unexamined Publication No.I34lI/57. Examples of the material of the glass used in the method include fluoride glass, chalcogenide glass, and glass containing elements such as Se or Te. These kind of materials should be formed as a glass without crystallization. It is therefore necessary to cool the melt rapidly.

The proposed method comprises the steps of sucking a melt into a small-diameter metal pipe, filling the pipe with the melt, and rapidly cooling the melt in liquid nitrogen. The inner wall of the small-diameter metal pipe is beforehand coated with gold by evaporation to thereby make the reflectivity of the metal pipe for light higher than that of the original metal pipe

Thus, the material is solidified as a glass in the metal pipe to be formed into a glass fiber.

The proposed method is not applicable to any fiber except a glass fiber. Furthermore, the proposed method has the disadvantage that the fiber manufactured by the method lacks flexibility because the melt is sucked in a rigid metal pipe. The metal pipe used in an example described in the proposal has an external diameter of I mm and an internal diameter of 0.4 mm. The metal layer assumes a large thickness of 300 $\mu$m. Accordingly it is considered that absorption by the metal layer becomes very large.

US-A-4139262 discloses a filter comprising multiple cylindrical layers of alternately high and low refractive materials and surrounded by a light absorbent material with an outer diffusing surface deposited by evaporation about a short axial length of a glass fiber.

EP-A-0149306 discloses cladded halide optical fibers for infrared transmission made by covering a two-part halide compound billet with a polymer layer, heating the assembly and drawing it through a die.

EP-A-0056996 discloses a process for producing an infra-red light transmitting optical fiber by drawing a rod of single crystal or polycrystalline metal halide into a fiber through a die.

It is the object of the present invention to provide an optical fiber which can completely enclose light within a core with no leakage of electromagnetic field out of the surface of the optical fiber and which is not fused at a portion of the optical fiber contacting with a member for supporting the optical fiber even if high power carbon dioxide laser light is pased through the optical fiber.

According to claim 1, said object is achieved by an optical fiber cladding covering outer circumferential surfaces of said core at least at end portions of said core, said cladding comprising at least two stacked lamination pairs of a first layer of a first material comprising lead fluoride and a second layer of a second material comprising a silver halide or germanium of predetermined thicknesses and differing refractive indices.

Fig. I is a perspective view showing an example of conventional infrared fiber having no cladding (or in other words having an air cladding).

Fig. 2 is a perspective view of a conventional infrared fiber in which an AgCl cladding is provided on an AgBr core.

Fig. 3 is a perspective view of a conventional infrared fiber in which a polyethylene cladding is provided on an AgBr core.

Fig. 4 is a view in geometrical optics, showing the path of light totally reflected on a core/cladding interface.

Fig. 5 is a view showing that an electric filed component tailing into the clad exists even in the guided mode.

Fig. 6 is a view for explaining that the condition of total reflection is often removed by dispersion within the core.

Fig. 7 is a graph view showing the electric field intensity of light in the radiation mode.

Fig. 8 is a sectional view of an optical fiber having an alternately laminated multi-layer film (N = I).

Fig. 9 is a sectional view of the optical fiber having an alternately laminated multi-layer film according to the present invention.

Fig. I0 is a perspective view of an optical fiber in which the alternately laminated multi-layer film is provided only at the incident or exit end portions.

Fig. II is a view for explaining the path of light rays in the alternately laminated multi-layer film.

Fig. I2 is a view for explaining the coordinates and parameters with respect to the alternately laminated multi-layer film.

Fig. I3 is a graph view for explaining the number of waves of light attenuated in the alternately laminated multi-layer film and the thickness of the multi-layer film.

Fig. I4(a) is a view for explaining mono-layer reflection, and Fig. I4(b) is a view for explaining three-layer reflection.

Fig. I5 is a graph view for explaining a preferable range of thickness in the alternately laminated multi-layer film. The axis of abscissas shows the thickness A ($\mu$m) of film I ($n_a$, $PbF_2$), and the axis of ordinates shows the thickness B ($\mu$m) of film II ($n_b$, Ge). The parameter is an oblique angle $\theta_a$. The doubly hatched portion $\psi$ shows an optimum area.

Fig. I6 is a cross section showing the fiber provided with the alternately laminated multi-layer film (N = I).

Fig. I7 is a cross section showing the fiber provided with the alternately laminated multi-layer film according to the present invention.

Fig. I8 is a perspective view of an optical fiber in which the alternately laminated multi-layer film is provided only at the incident or exit end portions.

Fig I9 is a diagram for explaining a preferable region of the thickness of the alternately laminated multi-layer film, in which the abscissa and the ordinate represent the film thickness a ($\mu$m) of the film I ($n_a$, $PbF_2$) and the film thickness b ($\mu$m) of the film II ($n_b$, AgBr), a parameter being an oblique angle in the film I, the reference symbol $\psi$ designating a preferable region.

Fig. 20 is a graph showing the result of measurement of the amount of light leaking from a side of the core in the case where the optical fiber core transmits carbon dioxide laser light from one end thereof.

Fig. 2I is a sectional view showing the structure of the optical fiber

Fig. 22 is a graph showing the result of measurement of the amount of light leaking over the whole length with respect to the optical fiber (B) of the invention, the optical fiber (B$'$) after the repetition of bending of I0,000 times, the comparative optical fiber (A) having only a core, and the comparative optical fiber (A$'$) after the repetition of bending of I0,000 times.

Fig. 23 is a longitudinal sectional front view of the optical fiber.

Fig. 24 is a longitudinal sectional side view of the same.

Fig. 25 is a cross section showing the optical fiber.

Fig. 26 is a longitudinal side view in section showing the same optical fiber.

Fig. 27 is a graph showing a radial distribution of the density of light power in the cross section of the optical fiber.

Fig. 28 is a cross section showing the optical fiber, in which the resin layer is provided.

Fig. 29 is a perspective view showing only the arrangement of the end portion for measuring the temperature rise of the terminal fixing portion when a $CO_2$ laser beam is passed therethrough.

Fig. 30 is a graph showing a radial distribution of the density of light power in the cross section of an optical fiber provided with only the alternately laminated multi-layer film clad.

The infrared optical fiber of the present invention has a cladding formed by alternately repeatedly coating lead fluoride ($PbF_2$) and silver bromide (AgBr) or silver chloride (AgCl) or germanium (Ge). Any material may be used to form the core as long as it can transmit infrared light.

Lead fluoride has a low refractive index, and AgBr or AgCl has a high refractive index. The number N of repetitions of the coating layers of lead fluoride and AgBr (or AgCl) may be selected suitably as long as it is not smaller than 2. The repetition number N of the coating layers of lead fluoride and germanium may be arbitrarily determined as long as the number N is not smaller than 2.

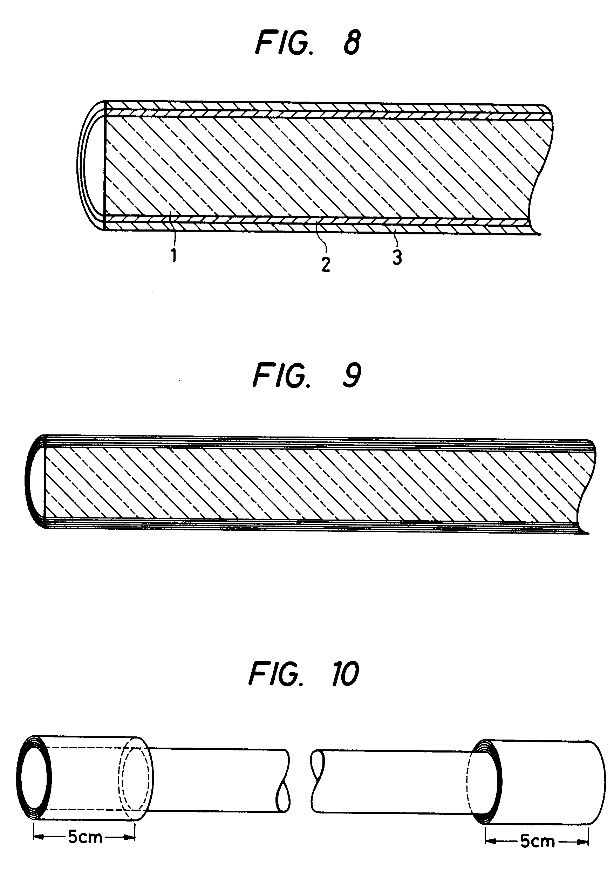

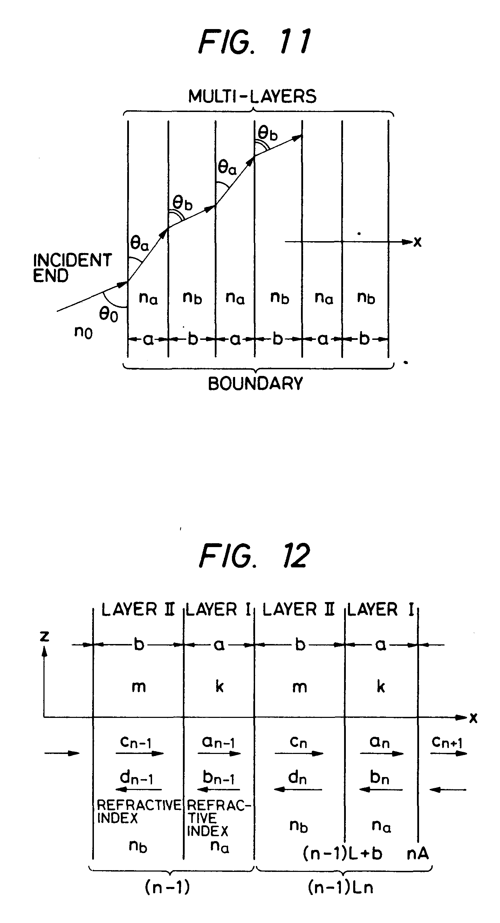

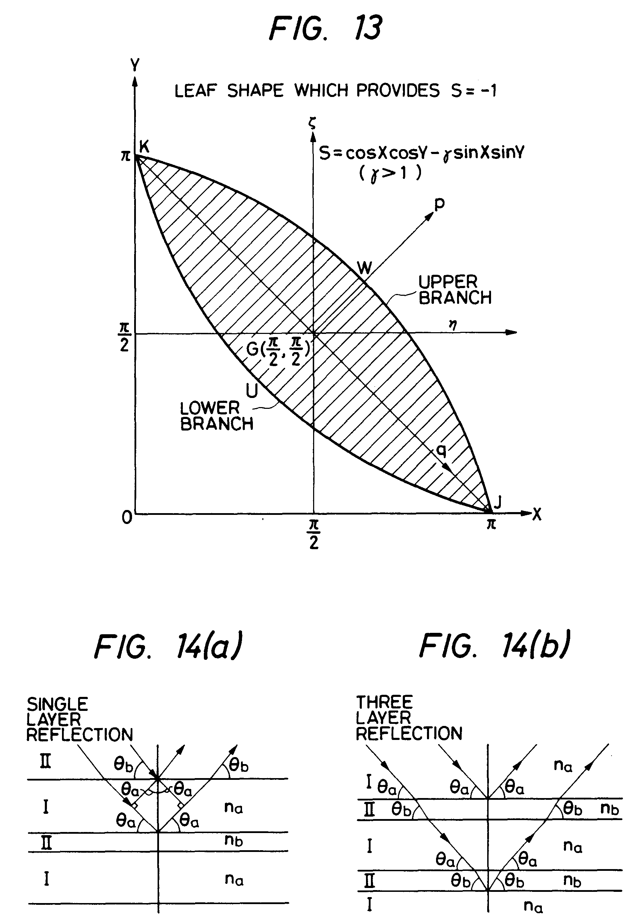

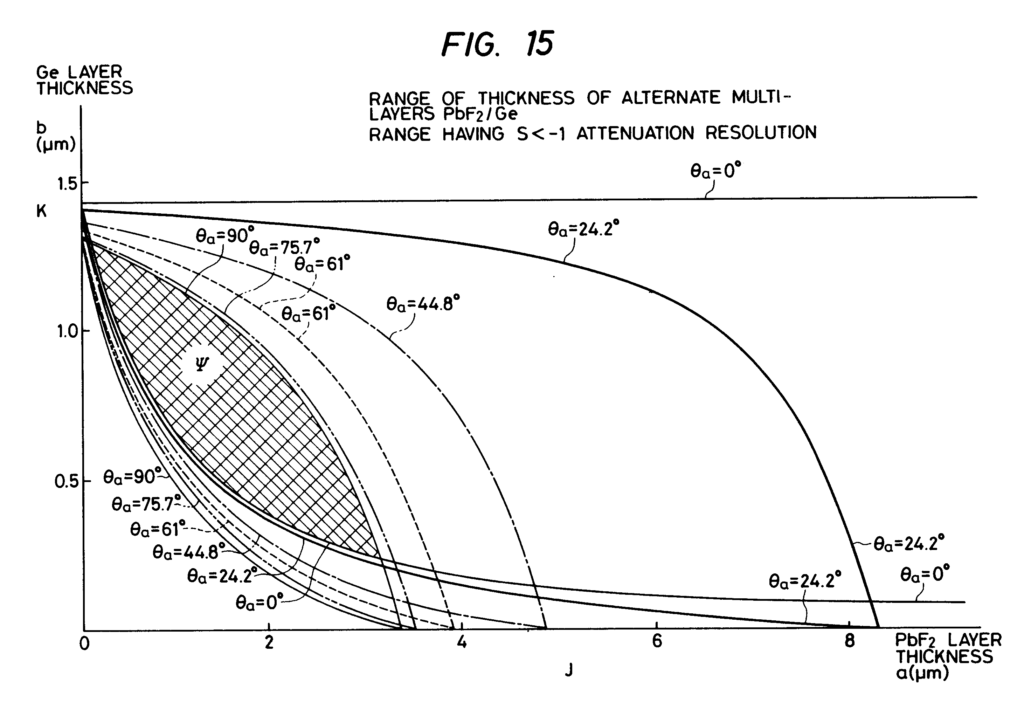

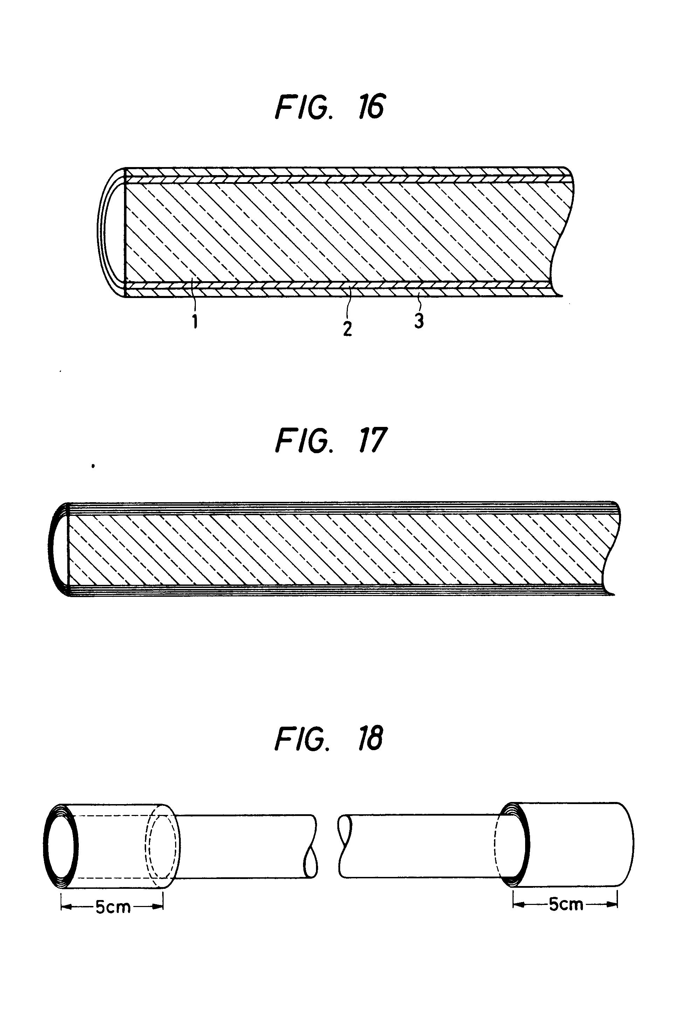

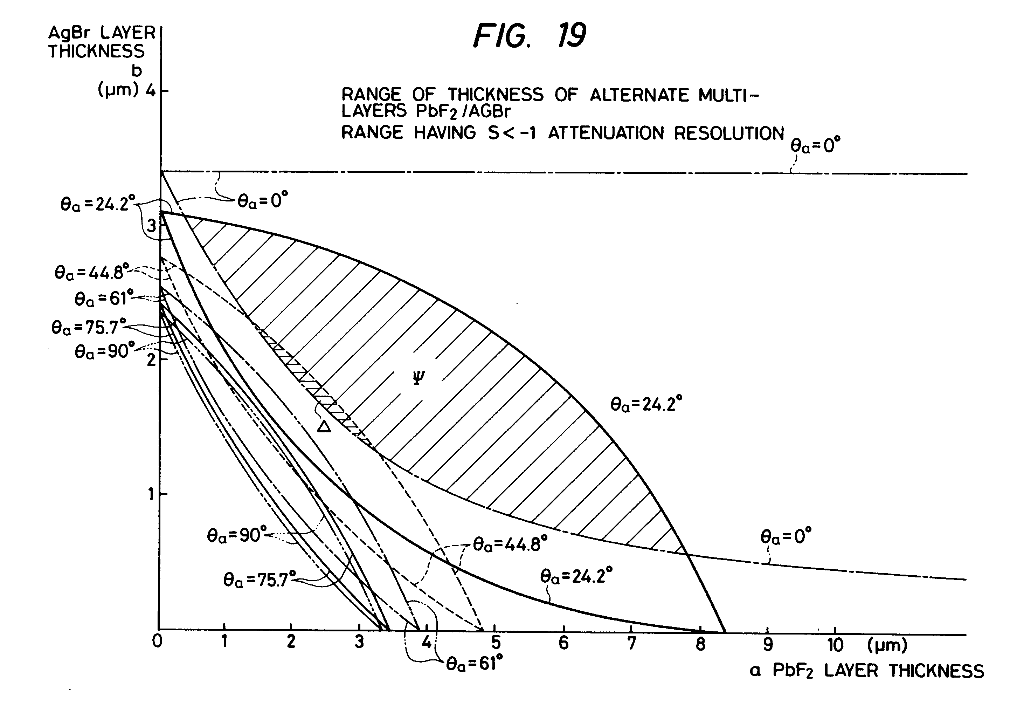

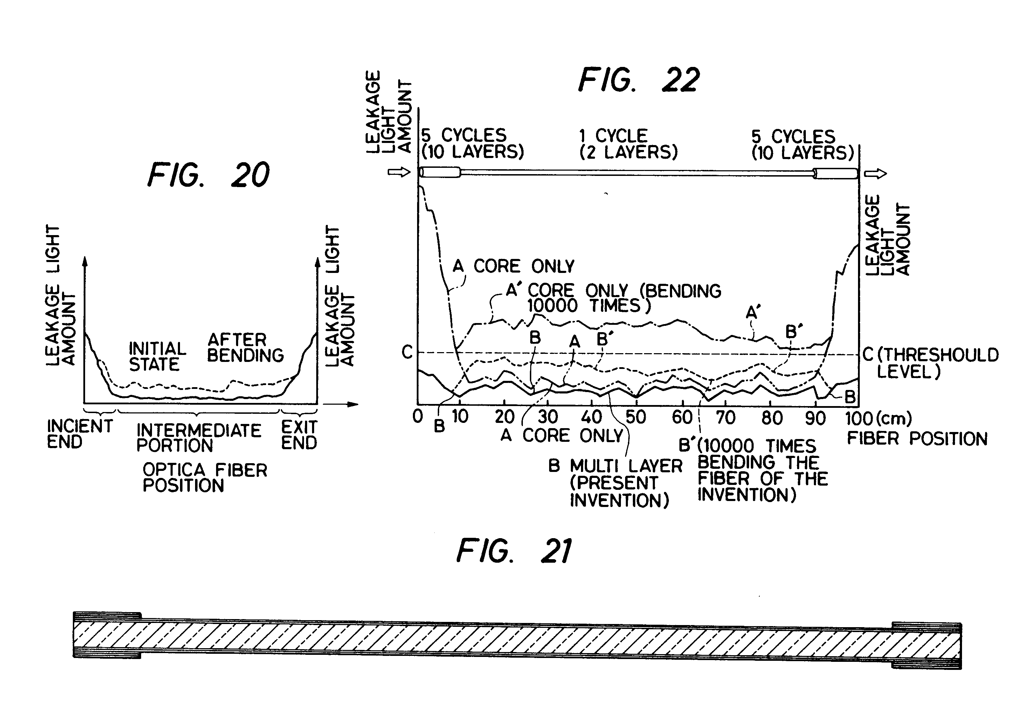

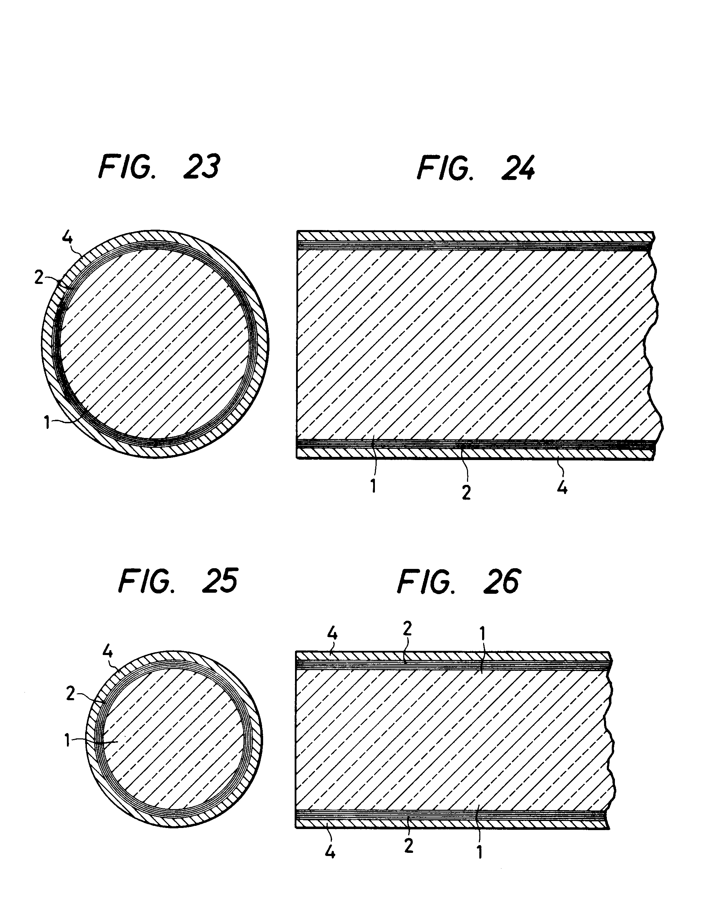

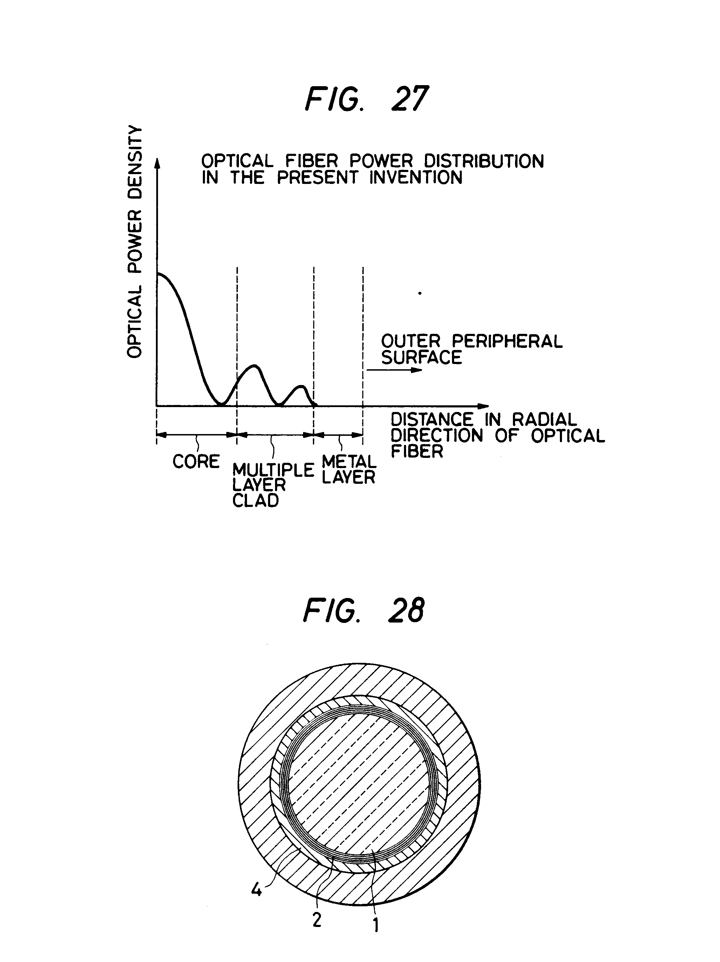

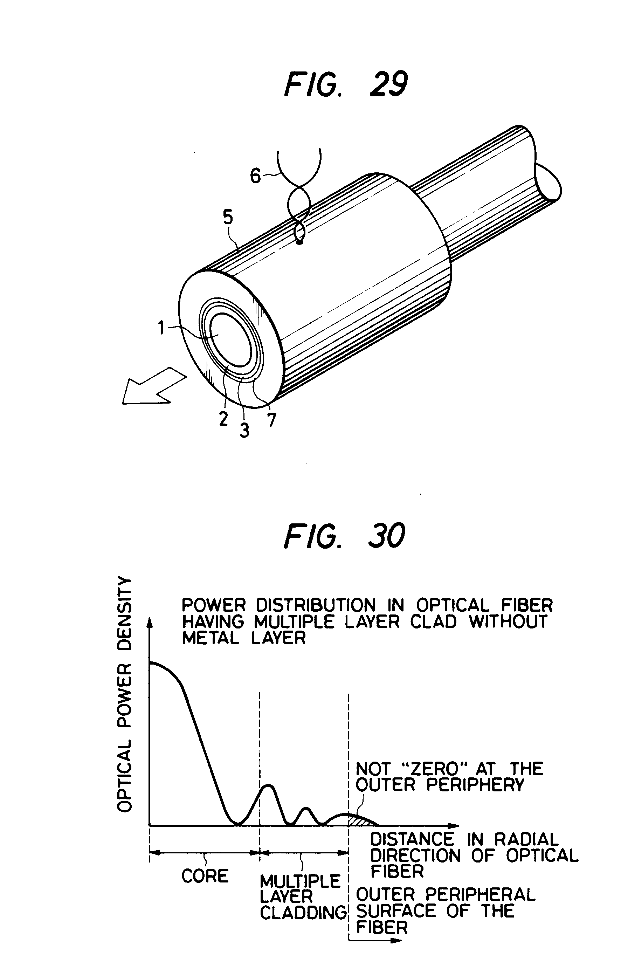

Fig. 8 shows a longitudinal sectional view of an optical fiber. The case of N = I is shown. That is, there is shown a simplest embodiment formed by coating with a single layer of $PbF_2$ and a single layer of Ge. It is desirable, however, to repeatedly coat this optical fiber with $PbF_2$/AgBr. An optical fiber core I made of a material capable of efficiently transmitting infrared light is disposed at the center of the fiber. As described above, the material of the core I may be selected suitably from a thallium halide crystal, an alkali halide crystal, and a silver halide crystal, or may be a chalcogenide glass.

The circumference of the core I is coated with a lead fluoride ($PbF_2$) layer 2 and the layer 2 is further coated with a germanium (Ge) layer 3. Infrared light is enclosed in the optical fiber core I by means of the $PbF_2$ and Ge layers 2 and 3 acting as a cladding. Although this embodiment shows the case where each of $PbF_2$ and Ge form a single layer, these materials may more effectively form multiple layers.

Fig. 9 shows a fiber of the present invention in which the repetition of $PbF_2$ and Ge is increased in number. The film formed by the repetition of $PbF_2$ and Ge layers is called an alternately laminated multi-layer film here. One layer of $PbF_2$ is called a $PbF_2$ layer. One layer of Ge is called a Ge layer. A double layer composed of a $PbF_2$ layer and a Ge layer is called a unit alternating layer.

It is most effective that the whole surface of the optical fiber is coated with the alternately laminated multi-layer film. However, the coating of the whole surface is difficult and expensive.

In the case where a low-cost optical fiber structure is required, the coating with the alternately laminated multi-layer film may be provided only in the vicinity of each of the incident and exit end portions of the optical fiber. Such a case is shown in Fig. I0. When carbon dioxide laser light is passed through the optical fiber, the leakage of light at the incident and exit end portion becomes a maximum. To prevent the leakage of light, the alternately laminated multi-layer film according to the present invention is provided to coat the incident and exit end portions.

In this drawing, the fiber core is made of AgBr with a diameter of 700 $\mu$m. A $PbF_2$/Ge multi-layer film composed of I0 $PbF_2$ layers and I0 Ge layers, 20 layers in total, is provided over a 5 cm length from each of the incident and exit ends. The film thickness of each layer is I $\mu$m. The whole thickness of the multi-layer film is therefore 20 $\mu$m.

The light containment effect by means of such a multi-layer cladding structure as described above will be explained hereunder on the basis of an electromagnetic field theory.

Fig. II shows a structure of the alternately laminated multi-layer film formed by the alternate lamination of two kinds of thin layers different in refractive index.

Assume now that light is transmitted at an angle $\theta_0$ from the left hand medium having a refractive index $n_0$. The incident light is reflected and refracted successively on the respective boundaries between adjacent layers. The place where the incident light is to go and the resulting amplitude of the ligh are determined by overlapping of all the light components as the result of reflection and refraction.

In the drawing, the alternately laminated multi-layer film is formed by repetition of a number of times of a film I having a thickness a and a refractive index $n_a$, and a film II having a thickness b and a refractive index $n_b$. Initially, light exists in the left end area. This area is a portion which corresponds to the core of the optical fiber and which is called "a starting end" or "a starting end portion". Let $n_0$ be the refractive index of the starting end portion.

There is no particular limit in the relation in value among $n_0$, $n_a$ and $n_b$. The light which advances obliquely from the starting end portion successively to the film I, the film II, the film I, the film II, ... is partially reflected at each boundary and the remainder is refracted to advance to the next film. Thus, reflected light is generated at each boundary.

Light rays will now be designated in accordance with the angle formed between the light and the boundary. Let $\theta_0$ be the oblique angle at the starting end portion. Let $\theta_a$ and $\theta_b$ be the oblique angles at the film I and the film II respectively. Because the boundaries are planes parallel to each other, the oblique angles $\theta_a$ and $\theta_b$ at the film I and the film II are always kept constant without being influenced by the repetition of refraction and reflection.

The light having been reflected on a boundary is returned toward the starting end portion but is partially reflected again by another boundary. Reflection is repeated as described above. Accordingly, it does not always follow that light is returned to the starting end portion by the alternately laminated multi-layer film. Although light can be really enclosed in the starting end portion (core) by the alternately laminated multi-layer film, the effect of containment cannot be explained with geometrical optics. The effect cannot be explained without resort to wave optics.

This is a different point from the light containment effect by the conventional simple core/cladding structure using a difference in refractive index. The light containment in a conventional fiber is easily understood by geometrical optics because it uses the fact that rays being at an oblique angle smaller than the total reflection angle are totally reflected on the boundary.

Light Containment owing to the Alternately Laminated Multilayer Film

One paper dealing with the propagation of light in such an alternately laminated multi-layer film is: P. Yeh, A. Yariv & C - S. Hong "Electromagnetic propagation in periodic stratified media. I. General theory" J. Optic. Soc. Am. vol. 67, No. 4, (I977), p. 423.

An alternately laminated multi-layer film is explained on the basis of Fig. I2. Let the x-axis be the axis of the abscissa. Films I having a refractive index $n_a$ and films II having a refractive index $n_b$ are alternately arranged so as to e perpendicular to the x-axis.

Now, parameters are used as follows.

Films I:

Refractive Index        $n_a$
Thickness        $\underline{a}$
Wave Number        $\underline{k}$

Films II:

Refractive Index        $n_b$
Thickness        $\underline{b}$
Wave Number        $\underline{m}$
Period L is a + b.

In the films I, there exist an advancing wave

$$e^{ikx} \qquad (1)$$

and a retreating wave

$$e^{-ikx} \qquad (2)$$

In the films II, there exist an advancing wave $e^{imx}$ and a retreating wave $e^{-imx}$. The wave in the z-direction can be represented by $\beta$.

$$e^{i\beta z} \qquad (3)$$

where $\beta$ is a phase constant in the z-direction.

Assume that the y-axis is taken in a direction perpendicular to the surface of the paper of Fig. I3 and that the alternately laminated multi-layer film is indefinitely extended in the z- and y-axes. Although light really advances both in the x-direction and in the z-direction, the two modes, TE mode and TM mode, are distinguished according to the x-direction. The TE mode means a mode in which the directions of electric fields E and F in the respective types of films are perpendicular to the x-direction.

On the other hand, the electric fields E and F and the differentials $\delta E/\delta x$ and $\delta F/\delta x$ of the electric fields in the x-direction are continuous at the boundary.

The above-described paper mainly treats the propagation of light in the x-direction.

The purpose of the present invention is to prevent the propagation of light in the x-direction to thereby improve the efficiency with respect to the propagation of light in the z-direction.

Although the purpose is different, the propagation in the x-direction is now considered according to the paper because propagation and non-propagation can be described by the same mathematical means.

The n-th film I and the n-th film II exist from x = (n-I)L to x = nL. The (n-I)th film I is in contact with the n-th film II and the x-coordinate of the contact point is x = (n-I)L. The x-coordinate of the contact point between the n-th film II and the n-th film I is x = (n-I)L + b.

The electric field E(x, z) in th n-th film I is described by the equation

$$E(x, z) = [a_n e^{ik(x-nL)} + b_n e^{-ik(x-nL)}]e^{i\beta z} \qquad (4)$$

where $a_n$ represents the amplitude of the advancing wave, and $b_n$ represents the amplitude of the retreating wave. Although the factor (x-nL) is represented in the term $e^{ik(x-nL)}$, it is a notational convenience which removes the factor $e^{iknL}$ from the amplitudes $a_n$ and $b_n$. Accordingly, the equation is general.

The electric field $F_n(x, z)$ in the n-th film II is described by the equation

$$F_n(x, z) = [c_n e^{im(x-nL)} + d_n e^{-im(x-nL)}]e^{i\beta z} \qquad (5)$$

where $c_n$ represents the amplitude of the progressive wave, and $d_n$ represents the amplitude of the regressive wave.

Because $E = F$ and $\delta E/\delta x = \delta F/\delta x$ at the boundary $x = (n-l)$, betwen the $(n-l)$th film I and the n-th film II, the following equations should hold.

$$a_{n-1} + b_{n-1} = c_n e^{-imL} + d_n e^{imL} \qquad (6)$$
$$ik(a_{n-1} - b_{n-1}) = imc_n e^{-imL} - imd_n e^{imL} \qquad (7)$$

In the equations, $\underline{m}$ represents the wave number. (If a suffix is added to $\bar{k}$ for discrimination, the descripton becomes compli$\bar{c}$ated. Accordingly, a different letter "m" is temporal$\bar{l}$y used as a symbol.) The various waves are identified in Fig. I2.

Because $E_n = F_n$ and $\delta E_n/\delta x = \delta F_n/\delta x$ at the boundary $x = (n-l)L + b$ between the n-th film II and the n-th film I, the following equations should hold.

$$a_n e^{-ika} + b_n e^{ika} = c_n e^{-ima} + d_n e^{ima} \qquad (8)$$
$$ik(a_n e^{-ika} - b_n e^{ika}) = im(c_n e^{-ima} - d_n e^{ima}) \qquad (9)$$

The equations (6) and (7) can be expressed in matrix representation as follows.

$$\begin{pmatrix} 1 & 1 \\ 1 & -1 \end{pmatrix} \begin{pmatrix} a_{n-1} \\ b_{n-1} \end{pmatrix} = \begin{pmatrix} e^{-imL} & e^{imL} \\ m/k\ e^{-imL} & -m/k\ e^{imL} \end{pmatrix} \begin{pmatrix} c_n \\ d_n \end{pmatrix} \qquad (10)$$

Equations (8) and (9) can be expressed in matrix representation as follows.

$$\begin{pmatrix} e^{-ika} & e^{ika} \\ k/m\ e^{-ika} & -k/m\ e^{ika} \end{pmatrix} \begin{pmatrix} a_n \\ b_n \end{pmatrix} = \begin{pmatrix} e^{-ima} & e^{ima} \\ e^{-ima} & -e^{ima} \end{pmatrix} \begin{pmatrix} c_n \\ d_n \end{pmatrix} \qquad (11)$$

The following matrix defining the relation between $(a_{n-1}, b_{n-1})$ and $(a_n, b_n)$ can be found from these matrices.

$$\begin{pmatrix} a_{n-1} \\ b_{n-1} \end{pmatrix} = \begin{pmatrix} A & B \\ C & D \end{pmatrix} \begin{pmatrix} a_n \\ b_n \end{pmatrix} \qquad (12)$$

where

$A = e^{-ika}(\cos mb - i/2(m/k + k/m) \sin mb)$    (I3)
$B = i/2(m/k - k/m) \sin mb$    (I4)
$C = +i/2(m/k - k/m) \sin mb$    (I5)
$D = e^{ika} (\cos mb + i/2(m/k + k/m) \sin mb)$    (I6)

It is apparent from the results that the following equations should hold.

$A = \bar{D}$    (I7)
$B = \bar{C}$    (I8)

In the equations, $\bar{C}$ represents a complex conjugate for C.

Let the matrix (I2) be simplified as follows.

$$H = \begin{pmatrix} A & B \\ & \\ C & D \end{pmatrix} \tag{19}$$

The norm of the matrix is I.

AD - BC = I     (20)

However, H is not a unitary matrix as well as is not a Hermite matrix.

Generally, a complex conjugate matrix with respect to transposition of a matrix is called a Hermite conjugate. Let it be expressed by an asterisk.

Let M be a matrix. Let to be the transposition of a matrix. A Hermite conjugate can be defined as follows.

$M^* = \overline{t(M)}$     (2I)

A unitary matrix U can be defined as a matrix having the following relation.

$UU^* = I$

In other words, a matrix in which the reciprocal matrix $U^{-1}$ is a Hermite conjugate is called "unitary".

$U^{-1} = U^*$     (22)

The norm of the unitary matrix is I.

$|U| = I$     (23)

The eigenvalue $\lambda$ has a characteristic that the absolute value thereof is I.

The matrix H determining the wave relation between adjacent layers in the multi-layer film has a characteristic of $|H| = I$, but the matrix is not unitary.

The eigenvalue $\lambda$ of the matrix H will be now found. Let $\underline{w}$ be the eigenvector.

$Hw = \lambda w$     (24)

To find , the following equation will be solved.

$$\begin{vmatrix} A-\lambda & B \\ & \\ C & D-\lambda \end{vmatrix} = 0 \tag{25}$$

Because of $|H| = I$, the following equation can be obtained.

$\lambda^2 - (A + D)\lambda + I = 0$     (26)

The solution in the case where $(A + D)^2$ is larger than 4 is different from the solution in the case where $(A + D)^2$ is smaller than 4.

In any case, the solution can be described as follows.

9

$$\lambda = (A + D \pm \sqrt{(A + D)^2 - 4})/2 \qquad (27)$$

In the case of $(A + D)^2 < 4$, the absolute value of the solution $\lambda$ is l, that is, $|\lambda| = $ l. This means the propagation in the x-direction is without attenuation. This shows oscillatory solutions.

In the case of $(A + D)^2 > 4$, the two solutions are real numbers. Let $\lambda_1$ and $\lambda_2$ be the solutions, then the product of $\lambda_1$ and $\lambda_2$ is l. The two solutions are an attenuation solution and a divergent solution.

The target of the present invention is the latter solution.

Propagating Mode in the x-direction

In the case of $(A + D)^2 < 4$, there are two solutions for $|\lambda| = $ l. These are oscillatory solutions. Because $\lambda$ represents one period of vibration, it can be represented by the equation.

$$\lambda = \exp(iKL) \qquad (28)$$

where K is a real number. KL gives a phase change at one period L. Accordingly, it may be said that K is the number of waves of the propagating light in the x-direction. K is different from $\underline{k}$ or $\underline{m}$.

$$\cos(KL) = (A + D)/2 \qquad (29)$$

The eigenfunction $\underline{w}$ will be found by the following equation.

$$w = \begin{pmatrix} B \\ \\ \lambda - A \end{pmatrix} = \begin{pmatrix} \lambda - D \\ \\ C \end{pmatrix} \qquad (30)$$

The matrix has not been normalized but can be easily normalized.

$$\begin{pmatrix} a_{n-1} \\ \\ b_{n-1} \end{pmatrix} = H \begin{pmatrix} a_n \\ \\ b_n \end{pmatrix} \qquad (31)$$

Accordingly, the following equation should hold.

$$\begin{pmatrix} a_0 \\ \\ b_0 \end{pmatrix} = H^n \begin{pmatrix} a_n \\ \\ b_n \end{pmatrix} \qquad (32)$$

Where $a_0$ and $b_0$ are components of the eigenvector at the starting end of the alternately laminated multi-layer film.

$$w = \begin{pmatrix} a_0 \\ \\ b_0 \end{pmatrix} \tag{33}$$

Light enters into the multi-layer film from the starting end.

If the initial vector is designated to satisfy the equation (33), then the following is obtained.

$$\begin{pmatrix} a_0 \\ \\ b_0 \end{pmatrix} = \lambda^n \begin{pmatrix} a_n \\ \\ b_n \end{pmatrix} \tag{34}$$

$$\begin{pmatrix} a_0 \\ \\ b_0 \end{pmatrix} = exp\ (iKnL) \begin{pmatrix} a_n \\ \\ b_n \end{pmatrix} \tag{35}$$

The sum of the probability of the existence of the advancing wave and the retreating wave in the n-th film l is expressed as follows.

$$|a_n|^2 + |b_n|^2 \tag{36}$$

From the equation (35), this value is always equal to the following value.

$$|a_0|^2 + |b_0|^2 \tag{37}$$

This means that the light can pass through the alternately laminated multi-layer film without attenuation. It is said that the mode of light is a propagating mode with respect to the x-axis.

However, because the present invention treats the propagation in the z-direction, the propagation in the x-direction is equivalent to the dispersion of energy in the z-direction. That is, the mode of light is a radiation mode with respect to the z-axis.

Attenuation Mode in the x-direction

The above-described paper treats the propagation in the x-direction. However, the present invention requires the condition that light is not dispersed in the x-direction. Accordingly, the point of view should be changed to the attenuation mode in the x-direction The attenuation mode will now be considered apart from the above-described.

The case where the eigenvalue $\lambda$ is a real number is considered. Let $_1$ and $_2$ be two roots, then $\lambda_1 \cdot \lambda_2 = l$.

$$(A + D) / 2 > l \tag{38}$$
$$(A + D) / 2 < -l \tag{39}$$

From the equations (l3) and (l6), $(A + D)/ 2$ can be described as follows.

$$(A + D) / 2 = ReA$$
$$= cos\ Ka\ cos\ mb - l/2(m/k + k/m)\ sin\ mb\ sin\ ka \tag{40}$$

For simplifying the equation, X, Y and $\gamma$ are defined as follows

X = ka      (4l)

Y = mb      (42)

$\gamma$ = l/2 (m/k + k/m)      (43)

Each of m and k is a positive number representing a refractive index, and $\gamma$ is a positive number larger than l. If m is equal to k, $\gamma$ = l. As m becomes different far from k, $\gamma$ increases more. In short, $\gamma$ is a scale of the refractive index.

Let (A + D)/2 be replaced by S. Then,

S = (A + D)/2 = cos X cos Y - $\gamma$ sin X sin Y      (44)

The equation (44) is rewritten as follows.

S = cos (X + Y) - ($\gamma$-l) sin X sin Y      (45)

From the definitions, X and Y are both positive. From (45), S is not smaller than -l and is not larger than l in the extreme when $\gamma$ = l (m = k). It is because s is cos (X + Y).

However, at $\gamma$ > l, there is a possibility that S may satisfy one of the inequalities (38) and (39).

However, S is not larger than l as long as each of X and Y is within a range from 0 to $\pi$. This is because the second term in the left side of the equation (45) is negative. In short, there is no possibility that the inequality (39) is valid, that is, S > l.

However, S < -l may be valid.

As $\gamma$ becomes larger than l, the range of the coordinates (X, Y) satisfying S < -l is more widened. The range of the coordinates (X, Y) satisfying S = -l as a boundary is now considered.

This situation should hold in the extreme when the value of X - Y approaches $\pi$.

$\eta$ = X - $\pi$/2      (46)

$\zeta$ = Y - $\pi$/2      (47)

Such a transformation is made. This merely expresses the coordinate transformation that the origin moves parallel to the point ( $\pi$/2, $\pi$/2) in an X - Y coordinate system.

At S = -l, the equation (45) is substituted as follows.

-l = -cos ( $\eta$ + $\zeta$) - ( $\gamma$ - l) cos $\eta$ cos $\zeta$      (48)

This can be rewritten as follows

$\sin^2$[( $\eta$ + $\zeta$)/2] = [( $\gamma$- l)/2]      (49)

In the following, a q - p coordinate system transformed by clockwise rotation of the $\eta$ - $\zeta$ coordinate system by 45° is now considered. The coordinate transformation is shown in Fig. l4.

p = ($\eta$ + $\zeta$)/$\sqrt{2}$      (50)

q = ($\eta$ + $\zeta$)/$\sqrt{2}$      (5l)

Because the equation (52) should hold, equation(53) should hold.

cos $\eta$ cos $\zeta$ = l/2 [(cos $\eta$ - $\zeta$) + cos ( $\eta$ + $\zeta$)]      (52)

$\sin^2$(p/$\sqrt{2}$) = [($\gamma$ - l) / 4] [cos($\sqrt{2}$ p) + cos($\sqrt{2}$ q)]      (53)

Because equation (53) expresses an even function with respect to p and q it is apparent that this is symmetric with respect to both the p-axis and the q-axis. Furthermore, it is apparent that p is zero for q = ±$\pi$/$\sqrt{2}$.

These points are equivalent to the points J and K of Fig. l4. The point J has the coordinates (0, $\pi$/$\sqrt{2}$) in the p - q coordinate system. In other words, the point J has the coordinates ($\pi$/2, - $\pi$/2) in the $\eta$ - $\zeta$ coordinate system or has the coordinates ($\pi$, 0) in the X - Y coordinate system. The point K has coordinates ( 0, -$\pi$/$\sqrt{2}$) in the p - q coordinate system. In other words, the point K has the coordinates (-$\pi$/2, $\pi$/2) in the $\eta$ - $\zeta$ coordinates system or has the coordinates (0, $\pi$ ) in the X - Y coordinate system.

12

When q is within a range from $-\pi/\sqrt{2}$ to $\pi/\sqrt{2}$, p has two values. The two values of p are equal in absolute value to each other and are respectively a positive number and a negative number.

From equation (53), the value of $|p|$ increases as q approaches 0 from $\pi/\sqrt{2}$.

Accordingly, it is apparent that the figure satisfying the equation (53) is shaped like a leaf KWJU as shown in Fig. I3.

This is a figure which has the point G $(\pi/2, \pi/2)$ as the center and which is symmetric with respect to both the p-axis and the q-axis.

In the following, the corner angles at the points K and J are considered. Differentiation at the points K and J is expressed as follows.

$$dp/dg = \pm \sqrt{(\gamma - I)/(\gamma + I)} \qquad (54a)$$

The corners at the points K and J become sharp as $\gamma$ approaches I. The corners become wider as $\gamma$ becomes large. The absolute value of (54) is not larger than I. That is, the angles of the corners from the q-axis are not larger than 45°. Accordingly, the curves at the point J and K never go out of the X-axis and the Y-axis.

As an equation expressing a leaf-like figure, equation (53) is an exact equation.

In the following, the area of the leaf-like figure is found. As the area cannot be found exactly, an approximation of p < < I is made based on an assumption that $(\gamma - I)$ is small. The equation (53) is approximated as follows.

$$p^2/2 \cong (\gamma - I)(I - p^2 + \cos \sqrt{2}\, q)/4 \qquad (54b)$$
$$p = \sqrt{2(\gamma - I)/(\gamma + I)} \cos q/\sqrt{2} \qquad (54c)$$

The area $\Sigma$ of the leaf-like figure is approximated as follows.

$$\Sigma = \int_{0}^{\pi/\sqrt{2}} 4p\,dq$$

$$= 8 \sqrt{(\gamma - 1)/(\gamma + 1)} \qquad (54d)$$

It is apparent from this result that the area of the leaf-like figure increases as the scale of difference in refractive index, that is, $(\gamma - I)$ becomes larger.

When the leaf-like figure has a large area, the range satisfying S < -I becomes wide. Accordingly, such a condition is suitable for light containment.

It has been understood that the figure expressed by (53) is the leaf-like figure of Fig. I3. Accordingly, the region satisfying S < -I is equivalent to the inside of the leaf as shown by oblique lines.

In the equations (44) and (45), S is smaller than -I if X and Y are within the leaf-like figure.

From (27), the eigenvalue $\lambda$ can be rewritten by using S as follows.

$$\lambda = S \pm \sqrt{S^2 - I} \qquad (55)$$

As described above, $\lambda$ is the eigenvalue of the matrix H. H relates the n-th amplitudes $a_n$ and $b_n$ to the (n-I)-th amplitudes $a_{n-1}$ and $b_{n-1}$.

When $\lambda$ is selected to be larger in absolute value than I, it is apparent from the equation (56) that $a_n$ and $b_n$ are attenuated compared with $a_0$ and $b_0$.

$$\begin{pmatrix} a_0 \\ b_0 \end{pmatrix} = \lambda^n \begin{pmatrix} a_n \\ b_n \end{pmatrix} \qquad (56)$$

This expresses the rightward attenuation from 0 to n. The other root of $\lambda$ expresses the leftward attenuation from n to 0. The leftward attenuation is made in the same manner as the rightward attenuation. Such attenuation cannot be explained in geometrical optics. If the alternately laminated multi-layer film is considered in geometrical optics, any kind of light should be transmitted. This inference is correct in the region of $-I \leqq S \leqq I$.

The fact that S is not larger than I has been described. When S is smaller than -I, the attenuation solution appears. What happens if S = -I? This is a question. Form equation (55), $\lambda$ is almost -I. This shows the fact that the wave function is inverted between the n-th and the (n-I)-th positions or in other words the wave function is changed in the x-direction with a period of 2L. This is nothing but Bragg reflection.

Generally, Bragg reflection appears when X rays are irradiated onto crystals or the like. As the direction of reflection varies, such reflection is also called Bragg diffraction. The theory is the same. Because the grating constant of crystals is almost equal to the wavelength of X-rays, X-rays are used.

Let L be the surface separation of crystalline planes. Let $\theta$ be the inclination angle of the X-rays falling on the crystal. Bragg reflection occurs when the following equation holds.

$$2 L \sin \theta = \lambda_0 \qquad (57a)$$

In this equation, $\lambda_0$ is the wavelength of X rays.

Incident X rays are diffracted on the (n-I)-th surface and further diffracted on the n-th surface. When the diffracted rays have an optical path difference of $\lambda_0$, the rays intensify each other. In this case, the difference between the (n-I)th surface and the n-th surface is $\lambda_0 / 2$. The phase difference is $\pi$. This corresponds to the eigenvalue $\lambda = -I$.

In short, Bragg reflection occurs for S = -I and attenuation in the alternately laminated multi-layer film occurs as S becomes small, so that light can be enclosed in the x-direction. The present invention utilizes this fact.

The wavelength of carbon dioxide laser light is I0.6 $\mu$m in a vacuum. It becomes shorter in a medium having a refractive index larger than I. Carbon dioxide laser light can be enclosed by the alternately laminated multi-layer film with a period as long as the wavelength.

If the film is composed of one kind of material and scattering factors exist for each period L, the equation (57) of Bragg reflection uniquely determines the angle $\theta$. However, this merely corresponds to the point J or point K (X = $\pi$ or Y = $\pi$).

What is meant by the upper and lower branches which are extended between the points J and K and which respectively correspond to S = -I?

Although the existence of the two branches could be known by wave optics, intuitive thinking of the meaning could assist the understanding of the phenomenon. It is to be thought that Bragg reflection should occur if the optical path difference between the waves reflected on the one-period different surface x = (n - I)L, x = nL, satisfies the equation

$$2n_a a \sin \theta_a + 2n_b b \sin \theta_b = \ell \qquad (57b)$$

where a represents the thickness of the film I, b represents the thickness of the film II, $\theta_a$ and $\theta_b$ represent respectively the oblique angles thereof, and $\ell$ represents the wavelength of light.

In Fig. I2, the equation (57b) merely expresses the coordinates (a, b) on the segment KJ corresponding to the following equation.

$$X + Y = \pi \qquad (57c)$$

Because different refractive films I and II exist, the condition of S = -I is satisfied both above and below the segment KJ.

What is meant by the upper and lower branches? Equation (57b) expresses that reflection on both the surfaces differing by one period satisfies the Bragg condition. However, the Bragg condition can be satisfied by other means using one film I or II. That is, the Bragg condition can be satisfied by mono-layer reflection. This corresponds to the upper branch of the leaf-like figure.

Furthermore, the Bragg condition may be satisfied by reflection on the boundary at a distance of three layers such as a combination of the film I, the film II and the film I, or a combination of the film II, the film I and the film II. This corresponds to the lower branch of the leaf-like figure of Fig. I3. Such a reflection is temporarilly called three-layer reflection.

However, it is not called Bragg reflection (on KJ) occuring on two surfaces at a distance of one period

14

L. Such a reflection is called two-layer reflection. Bragg reflection is easy to understand classically. However, this is buried between the mono-layer reflection of the curve KWJ (upper branch) and the three-layer reflection of the curve KUJ (lower branch). Accordingly, such a condition does not appear for S = -I.

Mono-layer reflection and three-layer reflection are respectively illustrated in Figs. I4a and I4b.

The reason why four-layer reflection (2L) does not occur is that the four-layer reflection is cancelled by the wave differing in phase by $\pm\pi$ produced from the second layer.

In the following, mono-layer reflection is explained. Why isn't it parallel to the Y axis in the vicinity of point J (X = $\pi$ , Y = 0)? Why is it a curve? It is thought that all are solved if the following Bragg condition (57d) holds for $n_a$, a and $\theta_a$.

$$2n_a a \sin \theta_a = \ell \qquad (57d)$$

This can be rewritten as follows.

$$X = \pi \qquad (57e)$$

Accordingly, this expresses a straight line drawn perpendicularly to the X-axis from the point J.

When the film II has a finite thickness b, the necessary thickness a of the film I is reduced. The rate of reduction is slight but the thickness a is surely reduced. Why is it?

Heretofore the direction angle $\bar{\theta}_a$ of rays has been assumed to be constant. However, the direction angle $\theta$ is indefinite if the different film II exists as a perturbation. Even if the sufficiently wide films I and II have direction angles $\theta_a$ and $\theta_b$, the direction angle $\theta$ is indefinite when the thickness a and b is smaller than the wavelength.

Because the films I and II are shorter than the wavelength $\ell$, the direction angle $\theta_a$ is indefinite. Accordingly, the direction angle $\theta_a$ should be determined in terms of probabilities. Such indefiniteness always exists in a conjugate physical quantity.

When a very thin film II coexists with the film I (b is sufficiently small), $\theta_a$ of the equation (57d) increases. Accordingly, the thickness a to satisfy the Bragg condition is reduced. This is the cause of the curve of the upper branch in the vicinity of the point J.

In the following, three-layer reflection is explained. The operation in the vicinity of the point J is described. Reflection on the surfaces at a distance of three layers, that is, the films II, I and II, is considered. The surface separation is a + 2b but is almost equal to a if b s sufficient small.

The Bragg condition is defined as follows

$$2n_a a \sin \theta_a + 4n_b b \sin \theta_b = \ell \qquad (57d)$$

This can be rewritten with X and Y, as follows

$$X + 2Y = \pi \qquad (57e)$$

This has a slope smaller than the slope of a tangent which touches the lower branch at the point J.

In this case, $\theta_a$ and $\theta_b$ are indefinite, because the film II as a perturbation enters the place where only the film I exists. Furthermore, $\theta_a$ increases and $\theta_b$ descreases. Accordingly, the Bragg condition for three-layer reflection is satisfied at the curve JU.

Design of Film Thickness

If the materials for the multi-layer film are determined, the refractive indices $n_a$ and $n_b$ are determined. If the light source is determined, the wavelength $\ell$ is determined. However, the thicknesses a and b cannot be known. Furthermore, the angles $\theta_a$ and $\theta_b$ between light and the respective surfaces of the alternately laminated multi-layer film widely vary. It is preferable that light containment is secured for any oblique angle.

Though the light wavelength $\ell$ is determined, it is not said that the respective numbers of waves k and m at the films I and II are determined. It is because $\theta_a$ and $\theta_b$ are variable. Although the wavelength of light in a vacuum is expressed by $\ell$, the notation is used to avoid confusion with the eigenvalue having been expressed by $\lambda$.

Let $n_0$ be the refractive index of the corner (that is, core). Let $\theta_0$ be the oblique angle between light and the boundary. Let $n_a$, $\theta_a$, $n_b$, $\theta_b$, be the parameters respectively at the films I and II. From Snell's law, the following equation should hold.

$$n_0 \cos \theta_0 = n_a \cos \theta_a - n_b \cos \theta_b \qquad (58)$$

The wave number $\underline{k}$ in the film I (that is, the number of waves in the x-direction) is expressed as follows.

$$k = [(2\pi n_a /\ell)^2 - (2\pi n_0 \cos \theta_0 /\ell)^2]^{1/2} \qquad (59)$$

This can be rewritten by using (58) as follows

$$k = (2\pi n_a /\ell) \sin \theta_a \qquad (60)$$

The wave number $\underline{m}$ in the film II is expressed as follows.

$$m = (2\pi n_b /\ell) \sin \theta_b \qquad (6l)$$

From the definitions (4l) and (42), the following equations should hold.

$$X = 2\pi n_a a \sin \theta_a /\ell \qquad (62)$$
$$Y = 2\pi n_b b \sin \theta_b /\ell \qquad (63)$$

The figure expressed for $S = -l$ in the equations (44) and (45) is a leaf-like figure, which is shown in Fig. l3.
The X-axis can be replaced by $\underline{a}$ and the Y-axis can be replaced by $\underline{b}$ with $\theta_a$ and $\theta_b$ as parameters.
Variables are changed to thickness a and b. The figure expressed for $S = -l$ is still a leaf-like figure. In this case, the position of the point J ($\overline{X} = \pi$, $Y = 0$) and the position of point K ($X - 0$, $Y = \pi$) vary corresponding to the angles. That is, the leaf-like figure is transformed so as to be enlarged or reduced in the a-axis and the b-axis.
In the condition of $X = \pi$, the value of $\underline{a}$ at the point J is expressed from the equation (62) as follows.

$$a = \ell/(2n_a \sin \theta_a) \qquad (64)$$

In the condition of $Y = \pi$, the value of b at point K is expressed as follows

$$b = \ell/(2n_b \sin \theta_b) \qquad (65)$$

In this equation, $\theta_b$ is related to $\theta_a$ by equation (58) and, accordingly, it is not an independent parameter.
If $n_a < n_b$, $_a$ varies within a range from 0° to 90° but $\theta_b$ varies within $\theta_a$ range from $_c$ to 90°. $\theta_c$ represents the total reflection angle and is determined by the following equation.

$$\cos \theta_c = n_a / n_b \qquad (66)$$

The value of $\underline{a}$ at the point J widely varies because $\theta_a$ is from 0 to 90°, but the value of $\underline{b}$ at the point K little varies because $\theta_b$ is from $\theta c$ to 90°.
When $\theta_a$ is zero, the leaf-like figure is enlarged to the right. The point J approaches 0 from $\underline{a}$ along the a-axis as $\theta_a$ increases from 0. The point K approaches 0 from $\underline{b}$ along the b-axis. Accordingly, the leaf-like figure is reduced.
The point J takes a minimum value $\ell/2n_a$ for $\theta_a = 90°$. At this time, the point K takes a minimum value $\ell/2n_b$. $\theta_b$ is 90° for $\theta_a$ 90°.
Low refractive $PbF_2$ layers are made of the films I. High refractive Ge layers are made of the films II. Let a and b be the thicknesses of $PbF_2$ and the thickness of Ge, respectively. The curve expressing the values of $\underline{a}$ and b for $S = -1$ with the angle $\theta_a$ at the $PbF_2$ layers as a parameter is shown in Fib. 15. The axis of the abscissa is a($\mu$m), and the axis of ordinates is b($\mu$m).
$\theta_a$ is selected from 0°, 24.2°, 44.8°, 61°, 75.7°, and 90°.
The intersection J of the leaf-like figure and the a-axis is found by the equation (64).
When the refractive index $n_a$ of $PbF_2$ is 1.558, the value of $\underline{a}$ is found as follows. ($\ell = 10.6$ micrometers)

16

| | |
|---|---|
| $\theta_a = 0$ | $a = \infty$ |
| $\theta_a = 24.2°$ | $a = 8.3 \ \mu m$ |
| $\theta_a = 44.8°$ | $a = 4.8 \ \mu m$ |
| $\theta_a = 61°$ | $a = 3.9 \ \mu m$ |
| $\theta_a = 75.7°$ | $a = 3.5 \ \mu m$ |
| $\theta_a = 90°$ | $a = 3.4 \ \mu m$ |

These are values of a intersecting the a-axis. The value of $\theta_b$ is determined for the same value of $\theta_a$ as follows, and the value of $\underline{b}$ intersecting the b-axis is found as follows.

| $\theta_a$ | $\theta_b$ | $b(\mu m)$ |
|---|---|---|
| 0 | 67.5 | 1.4 |
| 24.2 | 69.6 | 1.39 |
| 44.8 | 74.3 | 1.35 |
| 61 | 79.3 | 1.32 |
| 75.7 | 84.6 | 1.30 |
| 90 | 90 | 1.30 |

It is apparent that the value of $\underline{b}$ intersecting the b-axis varies little because the refractive index $n_b$ of Ge is sufficiently larger than $n_a$.

As $\theta_a$ and $\theta_b$ decrease, the leaf-like figure for S = -1 is moved right and enlarged in area. It is because the rate of reduction or enlargement is determined by the reciprocals of (64) and (65).

The common portion in the leaf-like figure for the range of $\theta_a$ of from 0 to 90° is shown by the shadowed region $\psi$. This is a region which is larger than the lower branch for $\theta_a = 0$ and which is smaller than the upper branch for $\theta_a = 90°$. This region is an optimum one for the thicknesses a and b.

It can be expressed that the thickness a of $PbF_2$ is not larger than 3.3 $\mu m$ and that the thickness b of Ge is not larger than 1.45 $\mu m$. However, the expression is not exact. This is because a ≤ 3.3 and b ≤ 1.45 and there is also a portion which is not included in the region $\psi$.

It is now considered to more exactly define the region $\psi$. The equation of the leaf-like figure for $\theta_a = 90°$ is described in more detail from equations (53), (62) and (43) as follows.

$$\sin^2 (2 \pi n_a a /\ell + 2 \pi n_b b/ \ell - \pi) = [ (n_a - n_b)^2 / 8n_a n_b] [\cos (2 \pi n_a a/ \ell + 2 \pi n_b b/ \ell - \pi ) + \cos (2 \pi n_a a / \ell - 2 \pi n_b b / \ell)] \quad (67)$$

The values, such as $n_a$ = 1.558, $n_a$ = 4,077, $\ell$ = 10.6 $\mu m$ and the like, are substituted into the equation.

$$\sin^2(a/1.083 + b/0.424 - 3.14) = 0.1249 [\cos (a/1.083 + b/0.414 - 3.14) + \cos (a/1.083 - b/0.414)] \quad (68)$$

This is a detailed equation for $\theta_a = 90°$.

In the following, the case of $\theta_a - \theta_0$ is considered. From the definitions of equations (62), (63) and (43), X approaches 0 and $\theta$ approaches ∞.

Returning to equation (45), the following equation should hold based on equations (41) and (43).

$$\ell im (\gamma - 1) \sin X = ma/2 \quad (69)$$

Because $\theta_a$ approaches 0, the following equation should hold for X = 0.

$$-1 = \cos Y - (ma / 2) \sin Y \quad (70)$$

In the definition of equation (63) with respect to Y, $\theta_b$ is replaced by $\theta_c$ (total reflection angle).

$$\pi n_b /\ell \ (\sin \theta_c)b = \cot^{-1}(ma / 2) \quad (71)$$
$$\cos [(\pi n_b /\ell \ ) \sin \theta_c] = 0 \quad (72)$$

The equation (72) has a definite root as follows.

b = $\ell$ / (2n$_b$ sin $\theta_c$)     (73)

This expresses the upper branch for $\theta_a$ = 0 in Fig. 4. The lower branch for $\theta_a$ = 0 is expressed by the following equation (7l).

b/0.8955 = cot$^{-1}$ (a/0 8955)     (74)

By solving the simultaneous equations (68) and (74), the intersection of the lower branch for $\theta_a$ = 0 and the upper branch for $\theta_a$ = 90° can be found.

It is important that the region $\psi$ satisfying S < -l in the whole area of $\theta_a$ of from 0 to 90° exists.

If the respective thicknesses of the films I and II are selected to be $\underline{a}$ and $\underline{b}$ within the region, it is deduced that light can be enclosed in the core (corner) against any oblique angle $\overline{\theta_a}$.

Calculation of Attenuation

It is apparent that light at all angles $\theta_a$ is attenuated as the light moves right in the region $\psi$. Although it has been described that the number of layers $\underline{n}$ can be arbitrarily selected, a question how many layers should be used is still remaining.

For example, the point (a = 2 micrometers, b = 0.7 micrometers) in the vicinity of the center of $\psi$ is considered as an example.

The most difficult light to enclose is at $\theta_a$ = 90°. In this case, the number $\underline{n}$ is suitably estimated by the example. At this time

X = 2 / l.083 = l.847     (75)
Y = 0.7 / 0.4l4 = 0.69l     (76)
$\ell$ = l.4995     (77)
S = -l.3995     (78)
$\lambda$ = -0.4203, -2.379     (79)

It is apparent from the value of $\lambda$ = -0.4203 that the amplitude of leaking light is reduced by about 40% as n is increased by one layer. The power of light is in proportion to the square of the amplitude. Accordingly, it is apparent that the power is attenuated to about l7% even at n = l. At n = 2, the power is attenuated to about 3 %.

This is calculated under the most severe condition of $\theta_a$ = 90°. Because $\theta_a$ is really smaller than 90°, the actual attenuation is greater. Accordingly, it is to be understood that light can be relatively efficiently enclosed even at n = 2 or even at n = l. If $\underline{n}$ is 3 or larger, light can be almost completely enclosed.

Example

A silver bromide core optical fiber having an alternately laminated multi-layer film as shown in Fig. 2 was prepared. The diameter of the AgBr core was 700 $\mu$m.

The alternately laminated multi-layer film was prepared as follows. The core was coated with a l $\mu$m thick PbF$_2$ film and thereafter further additionally coated with a l $\mu$m thick Ge film. Such procedure was repeated l0 times. Thus, there was prepared an alternately laminated multi-layer film having totally 20 layers and a 20 $\mu$m thickness.

Because a = b = l $\mu$m, light can be enclosed with respect to all the oblique angles $\theta_a$.

Such an alternately laminated multi-layer film having l0 periods and a 20 $\mu$m thickness was further coated with Nylon.

A 700 $\mu$m AgBr fiber core was directly coated with Nylon to thus prepare a fiber as a comparative example.

Carbon dioxide laser light was passed through each of the optical fibers according to the invention and the optical fiber as the comparative example to thereby measure the temperature rise (°C) at the position at a distance of l cm from the exit end.

The reason why the Nylon coating was used is that Nylon can sufficiently absorb CO$_2$ laser light. If Co$_2$ laser light leaks out of the fiber, Nylon efficiently absorbs the light so that its temperature rises.

In the case where this fiber is constituted by merely a core, the fiber can transmit carbon dioxide laser light of 45 W. With successively changing the transmission power of the carbon dioxide laser to 2W, 5W, l0W, l5W and 250W, the temperature rise was measured by a thermocouple which was put in contact with a

18

position being at a distance of l cm from the exit end. The results are shown in Table I.

TABLE 1

| $CO_2$ laser trans-Mission power (W) | Rise of temperature (deg) | |
|---|---|---|
| | Comparative example Direct Nylon coating | Example according to this invention Multilayers $(PbF_2/Ge)$ x 10) + Nylon coating |
| 2 | 28° | 3° |
| 5 | 69° | 6° |
| 10 | 142° | 13 |
| 15 | Occurrence of injury at output end | 18° |
| 150 | - | 178° |

It is apparent from the results that the temperature rise in the fiber having the alternately laminated multi-layer film is very little, and is about one-tenth as much as in the fiber having no alternately laminated multi-layer film.

In the case where the fiber is constituted by merely a core without having any Nylon coating, the fiber can transmit laser light of 45W. However, in the case where the fiber is coated with Nylon, the exit end is injured by laser light of 15W so that the fiber cannot transmit light of 15W. This is because the leaked light is converted into heat by the Nylon.

The fact that the temperature rise is little in the example according to the present invention in spite of being coated with Nylon having good absorbency means that the leaked light little exists at the outside of the multi-layer film.

Furthermore, in this example, high-power $CO_2$ laser light of l50W could be transmitted.

In a variation of the preceding embodiment shown in Fig. l6, the core I is coated with a layer 2 of lead fluoride $PbF_2$, and the $PbF_2$ layer 2 is further coated with another layer 3 of AgBr (or AgCl). These coating layers are formed through vacuum evaporation, sputtering, or the like. It is possible to efficiently enclose infrared rays within the optical fiber core by means of the $PbF_2$ and AgBr layers 2 and 3 acting as a cladding.

Fig. l7 shows another example of the optical fiber in which the number of repetitions of the coating layers of $PbF_2$ and AgBr (or AgCl) is increased.

Such a film that is formed by repeated coatings of two kinds of materials as described above is referred to as an alternating multi-layer film, which is often abbreviated to $PbF_2$/AgBr.

In this example, the fiber core is made of AgBr and has a diameter of 700 $\mu$m. Three multi-layer film pairs each constituted by $PbF_2$ and AgBr layers, that is, six thin films, cover a region of 5 cm from each of the incident and exit ends. The thicknesses of the film of $PbF_2$ and the film of AgBr are 4 micrometers and 2.6 micrometers respectively. That is, the total thickness of the multi-layer films is l9.8 $\mu$m.

As in the previous embodiment, the multi-layer cladding may be restricted to the two ends, as shown in Fig. l8.

The film I is a $PbF_2$ layer having a low refractive index ($n_a$ = l.558), the thickness of which is represented by a. The film II is an AgBr layer having a high refractive index ($n_b$ = 2.2), the thickness of which is represented by b.

Fig. l8 shows curves showing the values a and b which satisfy S = -l, with the oblique angle $\theta_a$ in the $PbF_2$ layer as a parameter. In the drawing, the abscissa and the ordinate show the thickness a ($\mu$m) of the $PbF_2$ layer and the thickness b ($\mu$m) of the AgBr layer respectively.

As the oblique angle $\theta_a$, values such as 0°, 24.2°, 44.8°, 6l°, 75.7° and 90° were selected.

Respective points of intersection J between leaf-shaped and the a-axis are obtained on the basis of the expression (64).

With respect to the $PbF_2$ film, assuming that the refractive index $n_a$ = 1.558 and $\ell$ = 10.6 $\mu$m, the relation between the oblique angle and the thickness a of the $PbF_2$ film intersecting the a-axis is as follows:

| | |
|---|---|
| $\theta_a = 0°$ | $a = \infty$ |
| $\theta_a = 24.2°$ | $a = 8.3\ \mu m$ |
| $\theta_a = 44.8°$ | $a = 4.8\ \mu m$ |
| $\theta_a = 61°$ | $a = 3.9\ \mu m$ |
| $\theta_a = 75.7°$ | $a = 3.5\ \mu m$ |
| $\theta_a = 90°$ | $a = 3.4\ \mu m$ |

The values of the angle $\theta_b$ are determined as follows corresponding to the same values of the angle $\theta_a$, and the respective values of the thickness $\underline{b}$ intersecting the b-axis are obtained as follows corresponding to the determined values of the angle $\theta_b$.

| $\theta_a$ | $\theta_b$ | b($\mu$m) |
|---|---|---|
| 0 | 44.9 | 3.41 |
| 24.2 | 49.8 | 3.12 |
| 44.8 | 59.8 | 2.79 |
| 61 | 70.0 | 2.56 |
| 75.7 | 79.7 | 2.45 |
| 90 | 90 | 2.41 |

The reason why the variation in value of the thickness $\underline{b}$ intersecting the b-axis is small is that the refractive index of AgBr is larger than that of $PbF_2$.

In Fig. l9, therefore, the b-axis is elongated to be twice as large as the a-axis.

All the figures satisfying S = -l with the angle as a parameter are varitions of th leaf-shaped figure of Fig. l3. The sizes along the ordinate and the abscissa are nothing but enlarged or reduced in accordance with $l/n_a \sin \theta_a$ and $l/n_b \sin \theta_b$.

In the hatched region $\psi$, it is possible to enclose all the light having the oblique angle $\theta_a$ within a range of from 0 to 24.2°.

Although the angle $\theta$ of 24.2° seems small, this value is not so small. This is the value of the oblique angle in $PbF_2$. If a core is made of AgBr, the oblique angle in the core is 50°, and therefore the angle of 24.2° is considerably large.

Since it is presumed that there essentially exists only a few light rays having such a large oblique angle, almost all the light transmitted through the core may be considered to have an oblique angle being not larger than 24.2°. Accordingly, it is possible to enclose substantially all the light if the values of the thicknesses a and b are selected within the region $\psi$.

Although the region $\psi$ is defined so as to be $\underline{a} = 0.3 - 7.8\ \mu m$ and $\underline{b} = 0.6 - 3.l\ \mu m$, this definition is not correct because the region $\psi$ is not rectangular.

An expression coresponding to $\theta_a = 24.2°$ is as follows:

$$\cos^2(a/5.28 + b/l.983)^2 = l.04 \sin (a/2.64) \sin (b/0.99l) \qquad (67)$$

An accurate expression of the lower branch of $\theta = 0$ is as follows:

$$a/2.l72 = \cot (b/2.l72) \qquad (68)$$

An accurate shape of the region can be obtained on the basis of the expressions (67) and (68).

A doubly hatched region $\Delta$ is more preferable. In this region, it is possible to enclose light having the oblique angle $\theta_a$ within a range of from 0 to 44.8°.

(I) Example of Calculation

In the region $\psi$, all the light having an oblique angle $\theta_a$ within a range of from 0 to 24.2° is attenuated as it is transmitted toward the right.

In the foregoing calculation, only the boundary S = -l is obtained, but no consideration has been made into the inherent value. Therefore, consideration will be made here to the number n of the films which suffices for the requirement. For example, a point is taken which is defined by $a = 3\ \mu m$ and $b = 2\ \mu m$ in the vicinity of the center of the region $\psi$ is taken.

The light having the angle $\theta_a$ of 24.2° is the most difficult to be enclosed among the light having the angle $\theta_a$ within the range of from 0 to 24.2°. Therefore, consideration will be made here as to the light having the angle $\theta_a$ of 24.2°. Although the light having the oblique angle in a range of from 0 to about 30° can be enclosed, calculation is made here as to the light having the angle of 24.2°.

$$X = 3 / 2.64 = 1.136 \qquad (69)$$
$$Y = 2 / 0.992 \qquad (70)$$
$$\gamma = 1.595 \qquad (71)$$

Accordingly,

$$S = -1.425$$
$$\lambda = -0.410; -2.44 \qquad (73)$$

From the value $\lambda = -0.41$, it can be found that the electric field amplitude is reduced to about 40% as the number $n$ of the films is increased by one. Power is reduced to about 16% as the number $n$ is increased by one because the power is proportional to the square of the amplitude. When $n = 2$, the power is reduced to about 3%.

From this result, it is found that light can be efficiently enclosed even when $n = 1$, and substantially perfectly enclosed when $n \geq 3$.

Example

An optical fiber as shown in Fig. 18 was formed. A fiber core made of a silver bromide crystal and having a diameter of 700 $\mu$m is coated over a length of 5 cm from the exit end with six layers in total consisting of three thin films of $PbF_2$ each 4 $\mu$m thick and three thin films of AgBr each 2.6 $\mu$m thick. The layers of $PbF_2$ and the layers of AgBr are alternately and repeatedly formed for three cycles.

In order to confirm that this structure is effective in enclosing light, light leaking at the exit end portion coated with the multi-layer film was detected by an infrared-ray detector. Leakage light in the case where coating was performed was reduced to about 50% in comparison with the case where no coating was performed.

The previous embodiments include an infrared-ray optical fiber having a core formed of silver bromide ($n = 2.2$) and a cladding formed of silver chloride ($n = 1.98$). However, the infrared light containment can be improved.

Because the infrared-ray optical fiber is generally used for transmitting light power, heating of the optical fiber is one important problem. Particularly, remarkable heating occurs both at the incident end for transmitting light form the laser to the optical fiber and at the exit terminal for transmitting light out of the optical fiber. At the intermediate portion of the optical fiber, heating is relatively insignificant. However, if the optical fiber is fixed, the core is distorted by the pressure of the fixing member so that heating occurs owing to the increase of absorption.

As described above, the absorption of the optical fiber increases at the incident and exit ends and the fixing portion so that significant heating occurs. The optical fiber is easily injured owing to the heating. Accordingly, light transmission power is limited so that the optical fiber is prevented from being injured. If the light absorption of the optical fiber can be reduced, the optical fiber can transmit stronger power.

Alternately Laminated Multilayer Cladding

In the previously described core and clad structure, light is enclosed in the core by use of the total internal reflection of light at the boundary between the core and the cladding. The total reflection angle $_c$ at the core boundary is determined by the equation:

$$\theta_c = n_2 / n_1 \qquad (74)$$

where $n_1$ is the refractive index of the core, and $n_2$ is the refractive index of the cladding.

Such light containment as described above is difficult in the infrared-ray optical fiber, because materials of nearly equal refractive index cannot be easily obtained. The inventors have thought of means for light containment on the basis of a principle quite different from the above-described light containment based on total internal reflection.

The light containment can be attained by alternately and successively laminating a high refractive material II and a low refractive material I on the outer circumference of the core. The refractive index $n_0$ of the core is not limited by the refractive index $n_1$ of the low refractive index material or the refractive index $n_2$ of the high refractive index material. Of course, $n_2 > n_1$. However, the relation among those refractive indices may be $n_0 \leq n_1 < n_2$, $n_1 < n_0 \leq n_2$, or $n_1 < n_2 \leq n_0$.

When the thickness of the film of the high refractive index material II is represented by b and the thickness of the film of the low refractive index material I is represented by a, the repetition period represented by L is expressed by the equation L = a + b.

Let k and m be the wave number of waves perpendicular to the films I and II respectively. Let $\theta_a$ and $\theta_b$ be the angles between the light rays and the films I and II.

$$n_0 \cos \theta_0 = n_1 \cos \theta_a = n_2 \cos \theta_b \qquad (75)$$

The wave number k at the film I is expressed by the following equation.

$$k = (2 \pi/\lambda)n_1 \sin \theta_a \qquad (76)$$

The wave number m at the film II is expressed by the following equation.

$$m = (2\pi/\lambda) n_2 \sin \theta_b \qquad (77)$$
$$\gamma = (m/k + k/m)/2 \qquad (78)$$

By equation (5), the definition of $\gamma$ is given. This is a value larger than l.
Let ka and mb be replaced temporarily by X and Y.

$$ka = X \qquad (79)$$
$$mb = Y \qquad (80)$$

When S defined by the following equation (8l) is smaller than -l, light travelling from the core to the films I and II is returned to the core by Bragg reflection.

$$S = \cos X \cos Y - \gamma \sin X \sin Y \qquad (8l)$$

The combination of thicknesses (a, b) to cause Bragg reflection has a two-dimensionally extended range with respect to the respective angle $\theta_a$. If the values of the respective thicknesses a and b are determined so that Bragg reflection always occurs at any value of the angle $\theta_a$, light can be enclosed in the core.

The name of "alternately laminated multi-layer film" is given by the fact that the films I and II are alternately repeatedly laminated on the core. The alternately laminated multi-layer film produces the light containment owing to Bragg reflection, which is quite diffferent from the above-described light containment owing to total reflection (equation (74)).

However, the condition of $S \leq -l$ is considerably severe, and the range of the thicknesses (a, b) to cause Bragg reflection becomes narrow if $l$ is not sufficiently larger than l. Accordingly, it is preferable that a very high refractive index material is used for the film II.

From this view, an infrared-ray optical fiber having an alternately laminated multi-layer clad using $PbF_2$ and Ge in combination has been prepared. In this case, the refractive index of $PbF_2$ is l.558, and the refractive index of Ge is 4.07. Accordingly, the range of thicknesses capable of producing Bragg reflection is wide. The range of the thicknesses capable of raising Bragg reflection is established at all the angles of $\theta_a$ of from 0 to 90 degrees.

Furthermore, an alternately laminated multi-layer cladding of $PbF_2$ and AgBr has ben prepared. The refractive index of $PbF_2$ is l.558, and the refractive index of AgBr is 2.2. Accordingly, the range of the combination of thicknesses capable of causing Bragg reflection at all the angles of $\theta_a$ does not exist. If the angle $\theta_a$ is smaller than 30 degrees, the range of the thicknesses capable of raising Bragg reflection exists. Furthermore, an alternately laminated multi-layer cladding of $PbF_2$ and AgCl can be considered. However, because the refractive index of AgCl is l.98, Bragg reflection cannot be produced if $\theta_a$ is not relatively low.

Let n be the number of repeated layers in the alternately laminated multi-layer film. The effect of containment is more improved as the repetition number becomes larger. However, manufacturing such a multi-layer film is difficult and expensive. As the repetition number n becomes larger, manufacturing cost increases.

The inventors have invented an infrared-ray optical fiber having a core surrounded by an alternately laminated multi-layer clad of such as $PbF_2/Ge$ or $PbF_2/AgBr$.

In the case where the whole surface of the optical fiber is coated with the alternately laminated multi-layer film, a problem exists in the economy of its manufacture because of the enormous costs required for forming the coating. A further defect is that it is difficult to maintain the thickness of the film constant over the whole of the optical fiber.

In the case where the multi-layer film is provided only at each of the incident and exit ends of the optical fiber, cost is relatively little. Because the incident and exit terminals, which are easily heated owing to absorption, are coated, stable infrared light transmission can be made and heating of the fixing portion can be reduced.

However, the intermediate portion of the fiber is not coated with the alternately laminated multi-layer film, so that light absorbing matter, such as water, dust, the internal wall of a fiber protection tube, or the like, often comes in direct contact with the core. As a result, laser light is greatly absorbed at the contact point to thereby heat the fiber and injure it.

Generally, the intensity of light leaking out of the optical fiber is large at its incident and exit end. Accordingly, the principle that the alternately laminated multi-layer film is provided at both the ends of the fiber is reasonable.

However, it is not reasonable that the intermediate portion does not need coating. As described above, the effect of the air cladding may disappear owing to the deposition of light absorbing matter on the core. Furthermore, if the infrared-ray optical fiber is repeatedly bent, the leakage of light at the intermediate portion increases.

Fig. 20 is a graph showing the result of measurement of the intensity of light leaking from a side of the core in the case where the optical fiber core transmits carbon dioxide ($CO_2$) laser light. The fiber used in Fig. 20 has no cladding but has a core.

The axis of the abscissa shows the lengthwise position of the optical fiber from the incident end to the exit terminal. The axis of the ordinate shows the intensity of leakage light at the lengthwise position. The intensity is measured by an infrared detector applied to a side of the fiber core.

The solid line shows an "initial state", which means the state of the optical fiber that has not yet been bent. Leakage light at the intermediate portion is very little. It is apparent that the leakage of light occurs mostly at the incident or exit end.

The broken line shows the intensity of leakage light with respect to the same infrared-ray optical fiber after it is repeatedly bent. In practical use, the infrared light fiber may be repeatedly bent. The bending produces a defect in the core to thereby increase dispersion and increase leaking light. Particularly, leakage light at the intermediate portion is increased. However, the leakage light at the intermediate portion is still significantly less than that at the incident or exit end portion.

Neither the method of coating the whole surface of the optical fiber with the alternately laminated multi-layer film nor the method of coating only the opposite ends of the optical fiber with the alternately laminated multi-layer film can produce the profile of leakage light of Fig. 20.

The optical fiber is characterized in that both the intermediate portion and each of the incident and exit end portions are coated with an alternately laminated multi-layer film. The optical fiber is further characterized in that the repetition number n at each of the incident and exit end portions is larger than the repetition number m at the intermediate portion. The "repetition number" means "cycle". The thickness of film at each of the incident and exit end portions is n, and the thickness of film at the intermediate portion is mL. That is, the nubmer of layers of both types of films at each of the indicent or exit end portion is 2n, and the number of layers at the intermediate portion is 2m.

The fibre is further characterized in that the following relation is satisfied.

$$n > m > 0 \qquad (82)$$

For example, at first the whole surface of the fiber core is coated with one cycle of alternating films Thereafter, the terminal portion is additionally coated with two cycles of alternating films. As a result, a fiber constituted by opposite terminal portions each having a three-cycle (n = 3) multi-layer cladding and an intermediate portion having a one cycle (m = l) multi-layer clad, can be realized.

Fig. 2l is a sectional view showing the structure of the infrared-ray optical fiber. To prevent the leakage of light at the intermedite portion, an m-cycle alternating multi-layer film is provided at the intermediate portion. To prevent to a greater extent the leakage of light at each of the incident and exit end portions, an n-cycle alternating multi-layer film (n is larger than m) is provided at each of the incident and exit end portions.

The case where the alternately laminated multi-layer film is uniformly provided at the whole surface of the fiber can be expressed by n = m. The case where the alternately laminated multi-layer film is provided only at each of the incident and exit end portions can be expressed by n > 0 and m = 0. The "alternately laminated multi-layer film" means a combination of thin films, such as $PbF_2$ / Ge or $PbF_2$ / AgBr. In the case of $PbF_2$ / Ge, the thickness of each film is preferably about l $\mu$m to 2 $\mu$m. In the case of $PbF_2$ /AgBr, the thickness of each film is preferably of the order of micrometers.

The diameter of the core can be suitably selected in accordance with the poer of carbon dioxide laser light to be transmitted. For example, a core having a diameter of about 500 $\mu$m to l000 $\mu$m can be used.

Evaporation, sputtering, etc., can be employed as the method of coating the surface of the optical fiber with clad material, such as $PbF_2$, Ge or AgBr.

Example

A silver bromide crystal optical fiber core with a diameter of 500 $\mu$m was used as a core. The length of the fiber core was l00 cm. The whole surface of the core was coated with an alternately laminated film of $PbF_2$ and AgBr for one cycle (two layers) That is, m was l. Each of l0 cm long portions from the incident and exit ends was additionally coated with a four-cycle film. That is, each end portion was coated with a five-cycle alternately laminated multi-layer film (totally, l0 layers).

Fig. 22 is a graph showing the result of measurement of the amount of light leaking over the whole length of the infrared light fiber. The axis of the abscissa shows the position of the fiber measured from the incident end. The axis of the ordinate shows the amount of leakage light meausred by a-n infrared detector applied to a side of the fiber.

The solid line B shows the result for the above-described optical fiber. The structure of the optical fiber is illustrated at the upper portion of the graph. It is apparent form the solid line B that the amount of leaking light is very little even at the end portion. This is an excellent fiber. Of course, leakage at the intermediate portion is also little. It is because the one-cycle alternating film is provided at the intermediate portion.

Furthermore, it is apparent that leakage light is almost uniform over the whole length. Although the amount of leakage light at the incident or exit end portion is generally large, the leakage light can be almost completely prevented by the specific five cycle alternating film covering the end portions.

The broken line C shows the threshold level of light injury owing to the contact beween a light absorber and the fiber. The threshold level is such that, if a light absorber comes in contact with the fiber with respect to which leaking light at non-contact is at the level C, light is absorbed by the light absorber to thereby heat the fiber to break it.

Even if leakage light is over the level C, the fiber not touching any light absorber is not injured by heating. However, if there is the possibility of touching a light absorber, a fiber for which leakage light exists above the level C cannot be used for the power of the light.

Next, the optical fiber was repeatedly bent by tracing a circular arc having a radius of l0 cm for l0,000 times cycles. In practical use, the fiber may be repeatedly bent. For determining the influence, the fiber was repeatedly bent. The result of measurement of the amount of leakage light is shown by the broken line B'.

The amount of the leakage light at the intermediate portion is increased. This leakage occurs because scattering centers are produced in the core by the bending. Hoever, the leakage is below the threshold level C of light injury.

In short, the optical fiber according to the present invention is kept at a safe level even if it is repeatedly bent in practical use.

As a comparative example, a fiber having only a core not coated with any alternately laminated multi-layer film was measured in the same manner. That is, a l00 cm long silver halide (AgBr) crystal fiber with a diameter of 500 $\mu$m was measured.

The result is shown by a two-dotted chain line A of Fig. 22. At the intermediate portion, the graph A is under the level C but over the graph B. In short, the leakage at the intermediate portion is larger than that of the optical fiber of the invention. The leakage at each of the incident and exit end portions is far larger than the level C. Particularly, the leakage at the incident end is remarkable.

The fiber having only a core was repeatedly bent by tracing of the fiber over a circular arc having a radius of l0 cm at l0,000 times. The result of measurement of the amount of leaking light after the bending is shown by the one-dotted chain line A'. Leakage at the intermedite portion is increased. Even at the intermedite portion, the leakage is over the level C. Accordingly it is apparent that use of the fiber having only a core is risky. It is because leakage light is increased by bending to thereby easily induce heat injury of the optical fiber.

Infrared optical fibers of the type incorporating a metal layer provided on the outer surface of an optical fiber core are commonly known. However, infrared optical fibers having a cladding structure for a general purpose have been not proposed yet.

One part of this application describes an infrared optical fiber having a novel cladding structure for the purpose of carrying $CO_2$ laser light.

The fiber has an alternately laminated multi-layer film which is formed of two kinds of materials of different refractive index and which is provided as a cladding on the outer surface of an infrared-ray optical fiber core.

The cladding material should well transmit infrared light. For example, an alternately laminated multi-layer film of $PbF_2/AgBr$ or an alternately laminated multi-layer film of $PbF_2/Ge$ is provided on the outer surface of the optical fiber core.

Because the cladding consisting of the alternately laminated multi-layer film reflects infrared light at the boundary between adjacent layers of different refractive index, the cladding has such a function that light directed outward from the core is reflected to be returned to the core.

As the layers within the multi-layer film are increased in number, the probability of occurrence of reflection increases. Accordingly, infrared light can be efficiently enclosed within the fiber core.

The principle of the alternately laminated multi-layer clad is remarkably different from that of the single cladding layer in the silica glass fiber or the like.

With respect to step-index-type silica glass fiber, an important problem exists in the difference in refractive index between the core and the clad. In many cases, the difference in refractive index between the core and the cladding is established to a very small value. This is because the silica glass fiber is mainly used for transmitting signals without distortion. Accordingly, the refractive index of the cladding is limited by the refractive index of the core. Thus, the clad material is determined depending on the core.

With respect to a infrared optical fiber, it is not necessary that the difference in refractive index between the core and the cladding should be established to a small value, because the infrared optical fiber is not used for transmitting signals but is used for transmitting light power.

The alternately laminated multi-layer clad proposed by the inventors has a problem in the difference in refractive index between two kinds of materials forming a cladding. This is because reflection at the boundary between adjacent layers within the multi-layer cladding is more important than the reflection at the boundary between the core and the clad.

For this reason, the materials of the cladding can be suitably selected without limitation owing to the refractive index of the core, that is, without limitation owing to the material of the core.

The alternately laminated multi-layer film can effectively enclose infrared light independently of the kind of the core.

Many kinds of materials can be used for the core of the infrared optical fiber and have respectively advantages and disadvantages. The infrared. optical fiber has an advantage in that the materials of the cladding is in principle not limited by the refractive index of the core.

The alternately laminated multi-layer cladding type of optical fiber is very useful particularly in the case where high power $CO_2$ laser light energy is transmitted. In the infrared optical fiber having the alternately laminated multi-layer clad, infrared light leaks out of the side surface of the fiber to only a minor extent. Even if light absorbers, such as dust, water and the like, are deposited on the outer surface of the fiber, light is not absorbed by the deposited absorbers. Accordingly, the advantage is that accidents such as heating of the fiber owing to light absorption and injuring of the fiber do not happen. For this reason, the infrared optical fiber having the alternately laminated multi-layer cladding has a transmission characteristic that is not influenced by the environment. That is, such an optical fiber can be realized which has a stable transmission characteristic.

Generally, the optical fiber should be fixed by certain means in order to adjust the input or output end thereof to a converging optical system, such as a lens or a mirror, which controls the incidence of light to and the exit of light from the fiber.

However, the fiber is locally heated owing to the contact between the fixing member and the fiber. This may cause an accident that injuries the laser at a fixing portion. The reason is that the fiber is distorted by the fixing member pressing the fiber to thereby increase the leakage of light. The alternately laminated multi-layer clad could suppress the leakage of light at the fixing end and could effectively prevent the heating of the optical fiber at the fixing end.

As described above, the infrared-ray optical fiber having an alternately laminated multi-layer cladding which has been invented by the inventors of this application shows an excellent effect. However, the materials used as the multi-layer clad have been crystalline material, such as $PbF_2$, Ge, AgBr or AgCl. This type of materials are easily injured by friction. As a result, the infrared-light containment effect of the multi-layer film has been often reduced by the injuring of the material.

Further, the multi-layer film cladding is arranged to reflect outward travelling light at a boundary between adjacent layers and attenuate the outward traveling light in the multi-layer film. Therefore, it is impossible to completely contain the light.

Fig. 30 is a graph showing a radial distribution of light intensity inside the optical fiber. As shown in the drawing, the light intensity is high at the center of the optical fiber, and is attenuated in the multi-layer film cladding. However, the light intensity is not reduced to zero even at a position outside the outermost layer of the multi-layer film cladding. That is, the light power is not reduced to zero even at the circumference of the optical fiber. Although the amount of light power leaking out of the circumference of the optical fiber is slightly relative to the total light power, the amount inevitably becomes large as the absolute amount of light power propagated through the optical fiber increases. Therefore, in such a structure in which only the alternately laminated multi-layer film is provided on the circumference of the optical fiber, there is a limit to the transmitted light power. When the light power to the transmitted exceeds this limit, the light power leaking to the circumference of the optical fiber increases, so that the optical fiber may generate intense heat to thereby damage the laser if it contacts a light absorber or a terminal fixing member.

As shown in Figs. 23 and 24, the outer surface of an optical fiber core I is coated with a multi-layer cladding 2. The multi-layer cladding 2 may cover the whole surface of the optical fiber core I or may partially cover the input or output end thereof. The outer surface of the multi-layer cladding 2 is further coated with a resin layer 4.

Material used for the optical fiber core I can be suitably selected. Examples of fibers capable of tranmitting $CO_2$ laser light are as follows.

(I) Alkali Halide Crystals

Crystals of CsBr, CsI, KI, KBr, NaCl, CsCl, KCl, NaF, LiF and NaI, and mixed crystals thereof.

(2) Silver Halide Crystals

Crystals of AgBr, AgCl and AgI, and mixed crystals thereof.

(3) Thallium Halide Crystals Crystals of TIBr, TICI and TII, and mixed crystals thereof.

(4) Crystals of ZnSe and ZnS, and mixed crystals thereof

(5) Chalcogenide Glasses As-S

The present invention is applicable to any core material.

The multi-layer cladding 2 is almost transparent for infrared light and is formed by alternately coating of two kinds of materials having different refractive index.

The inventors have perfected a multi-layer cladding of alternate laminates of $PbF_2$ and AgBr. $PbF_2$ is a low refractive index material and AgBr is a high refractive material. The inventors have already also perfected a $PbF_2$/Ge alternately laminated multi-layer cladding.

A resin layer 3 is further provided on such an alternately laminated multi-layer cladding.

The resin layer 4 is provided to protect the multi-layer cladding 2 to thereby prevent its injury. If the multi-layer cladding 2 is injured, the injured portion is intensely heated owing to the leakage of light to thereby injure the fiber's body.

The resin layer 4 is almost transparent to infrared light and preferably employs a material not larger in refractive index than the low refractive index material of the multi-layer cladding 2. If the resin layer is not transparent for infrared light, the resin layer possibly absorbs infrared light to thereby induce intense heating. If the refractive index of the resin layer is higher than that of the low refractive index material the infrared-light containment effect of the cladding 2 is reduced. Polyethylene is a material which is transparent in the infrared region and has a refractive index of I.46.

In the multi-layer claddings of either $PbF_2$/AgBr or $PbF_2$/Ge prepared by the inventors, the low refractive material in each of the claddings 2 is $PbF_2$. The refractive index of the low refractive material is I.55 for infrared light. Even if $PbF_2$ is replaced by polyethylene to form a multi-layer clad, the cladding can have the same effect as the $PbF_2$AgBr cladding with respect to the light containment effect because the refractive index of polyethylene is smaller than that of $PbF_2$.

However, polyethylene has a very large light absorption coefficient of 200 $cm^{-1}$ for the $CO_2$ laser wavelength of I0.6 $\mu$m. Even if a thin polyethylene film is used, the absorption is considerable. If all the low refractive layers of the multi-layer cladding are replaced by polyethylene layers, absorption owing to the polyethylene possibly occurs in the case of large transmission power to thereby injure the fiber. Accordingly, polyethylene cannot be used as the low refractive material within the alternately laminated multi-layer clad.

A resin layer of polyethylene or the like is provided on the outer surface of the multi-layer clad. At the outside portion of the multi-layer clad, light power is sufficiently attenuated by the light containment effect of the multi-layer clad. Accordingly, there is no danger of light injury occurring owing to light absorption by the polyethylene layer. Furthermore, one of the important features is that the light containment effect of the multi-layer cladding is not spoiled because polyethylene is provided as a low refractive material on the outside of the multi-layer cladding.

A resin layer 4 is provided at the outermost of an infrared light fiber having an alternately laminated multi-layer cladding 2. The resin layer can protect and prevent the injury of the multi-layer cladding 2. Accordingly, the fiber has a mechanically stable multi-layer cladding structure.

Because the multi-layer clad is not easily injured, the light containment effect thereof is not spoiled. The possibility of occurrence of the laser injury of the fiber can be descreased.

Because the refractive index of the resin is not larger than that of the low refractive material within the multi-layer clad, the light containment effect of the multi-layer clad is not spoiled by the addition of the resin layer.

The optical fiber according to the present invention can be used as an optical fiber for transmitting carbon dioxide laser light for various purposes, such as a light transmission line for laser medicine and a light transmission line for laser machining.

In Figs. 25 - 29, the optical fiber is arranged such that a metal layer having a high reflection factor is provided on an outer circumference of an alternately laminated multi-layer film clad.

The metal having a high reflection factor may include, for example, gold, silver and aluminum. The thickness of the metal layer may be selected to be of the same order as or less than the wavelength of infrared light, that is, suitably selected to a value within a range of from 0.l $\mu$m to l0 $\mu$m.

The wavelength of light to be transmitted through the optical fiber according to the present invention is assumed to be l0.6 $\mu$m which is the wavelength of a $CO_2$ laser beam, or a value in the vicinity of this wavelength. In such a region of wavelength, the foregoing metal materials can easily realize a reflectivity not smaller than 95%.

Fig. 25 and 26 are a cross section and a longitudinal side view in section, showing the optical fiber according to the present invention. In the drawings, an optical fiber core l having a large diameter is provided at the center of the optical fiber. A thin alternately laminated multi-layer film clad 2 is provided around the optical fiber core l. A thin metal layer 4 is provided on the outermost circumference of the alternately laminated multi-layer film cladding 2.

The optical fiber core may be formed by using such a desired infrared-ray fiber material as described in the foregoing embodiment, for example, a crystalline fiber of silver halide, thallium halide or alkali halide, like, or a glass fiber of chalcogenide glass or fluoride glass. As described above, the alternately laminated multi-layer film cladding 2 is not limited by the core, but may be a generally used as cladding 2.

The multi-layer film cladding 2 is formed by stacking successive thin films of a material mostly transparent to infrared rays. Further, the multi-layer film clad 2 may be a combination of materials having high and low refractive indices.

As described above, the inventors of this application have accomplished the multi-layer film clad of $PbF_2$/AgBr. $PbF_2$ is a material having a low refractive index and AgBr is a material having a high refractive index. Thus, the multi-layer film cladding 2 has a function such that infrared light is reflected at the boundary between adjacent films in the cladding 2 so as to be returned into the core l. Although the infrared light can be reflected also by the metal layer 3, the component of the infrared light entering into the metal layer without being reflected therefrom is absorbed in the metal layer to thereby generate heat in the metal layer. On the other hand, the multi-layer film clad is made of materials having high transmittance, and therefore it never generates heat due to absorption of the infrared light.

Additionally, the inventor of the present invention has accomplished a multi-layer film clad of $PbF_2$/Ge.

Furthermore, it is possible to form another alternately laminated multi-layer film by a combination of materials which have refractive indexes different from each other and each of which has high permeability to infrared light.

The outermost metal layer 4 is constituted by a thin metal film made of gold, silver, aluminum, or the like and having such a function to reflect light leaking out of the alternately laminated multi-layer film clad. Thus, light can be perfectly prevented from leaking out of the outer circumference of the optical fiber.

As shown in Fig. 30, the infrared light power which is allowed to leak out of the alternately laminated multi-layer film clad is extremely small relative to the whole light power. Being thus extremely small, the leaked light power can be perfectly refelcted by the metal layer to the returned back to the core l even if the metal layer 2 is thin.

Although the optical fiber has a fundamental arrangement as described above, the outer circumference of the metal layer 4 can be further coated with a resin layer 3, a shown in the cross section of Fig 28, in order to increase mechanical strength so as to protect the optical fiber. The resin layer 3 may be made of, for example, polyethylene.

Since infrared light does not leak out of the outer circumference of the metal layer 4, there is no possibility of burning of the resin layer 3. Therefore, it is possible to use any resin material which is suitable to be molded.

Further, since the light leakage may cause a serious problem at the incident and exit ends of the optical fiber, only the end poritons can be coated with the alternately laminated multi-layer film.

Also in such a case, a metal layer coating may be effectively provided on the alternately laminated multi-layer film at each of the end portions.

In order to prove the fact that the optical fiber according to the present invention is effective in improving the amount of light power to be transmitted, the following experiment was conducted.

An optical fiber core l made of crystalline AgBr and having a diameter of 700 $\mu$m was prepared. The optical fiber core l was coated with $PbF_2$ and AgBr by repeatedly alternately laminating one on top of the other for three cycles. That is, $PbF_2$ and AgBr are alterntely laminated and are repeated to form a cladding 2 made of three layers of $PbF_2$ and three layers of AgBr. This cladding 2 was provided over the whole length of the core l.

Two optical fibers were prepared in such a manner as described above. A terminal fixing member 5, shown in the perspective view of Fig 29, of stainless steel was fixed with resin at each terminal of one of the optical fibers which was maintained as it was. This optical fiber was called sample a.

In the other optical fiber, the multi-layer film cladding 2 was coated with gold to a thickness of l $\mu$m so that a metal layer 4 was provided on the optical fiber. Then, a terminal fixing member 5 of stainless steel was fixed with epoxy resin 7 at each terminal of the optical fiber. This optical fiber was called a sample b. The sample a is different from the sample b in that the gold layer 3 having a thickness of l $\mu$m is formed in sample b but not in sample a.

A temperature measuring thermocouple 6 was made to be in contact with each of the side surfaces of the terminal fixing members 5. Thereafter, a $CO_2$ laser beam was caused to pass through each of these samples. The thermocouple 6 was disposed to detect the temperature rise of the terminal fixing member 5 at the exit end.

The temperature rise becomes large as the laser power becomes large. In the sample b, it was practically confirmed that the temperature rise was smaller than that of the sample a and no laser damage was generated.

Table 1 shows the relationship between the laser power of a $CO_2$ laser beam, and the result of measurement of the temperature rise of the terminal fixing member in each of the samples a and b. The laser power was obtained by measuring the power of the laser beam emitted from its exit end by using a power meter.

Table 1

| $CO_2$ Laser Power and Temperature at Terminal Fixing Member | | |
|---|---|---|
| Transmission Power of Laser (Output end) | Temperature Rise (°C) | |
| | Sample a | Sample b |
| 50W | 55 | 40 |
| 75W | 81 | 62 |
| 100W | 113 | 85 |
| 125W | 140 | 103 |
| 150W | 170 | 125 |
| 175W | Laser damage in terminal fixing member | 145 |

As is apparent from these results, the temperature rise in the sample b provided with the l micrometer thick gold layer was suppressed to 70 - 80% of that in the sample a provided with no gold layer.

Further, in the case where the power of the $CO_2$ laser beam was l75W, damage was generated in the terminal fixing portion of the sample a so that the sample a was not able to be used. The sample b, on the contrary, could be used even in the case of the laser power of l75W. On the assumption that the temperature rise is a factor for determining an upper limit of laser power which can be transmitted, the sample b can transmit laser power larger than that of the sample a by 20 - 30%.

Thus the fiber according to the invention is an excellent infrared-ray fiber and offers the following

28

advantages:

(l) Infrared light which is apt to escape from the optical fiber can be enclosed in the core.

(2) There is no limiting condition between the refractive index of the core material and the refractive index of the alternately laminated multi-layer film forming a cladding.

(3) Even if a mechanically reinforcing layer is provided on the outside of the fiber so as to be in close contact with the fiber, the reinforcing layer is not heated. Accordingly, it is easy to provide reinforcement of the fiber.

(4) For the same reason, it is easy to support or fix the fiber.

(5) Because light which is apt to escape from the optical fiber can be enclosed, the material around the fiber is not heated by absorption of leaked light.

(6) The optical fiber can be used without cooling even in bad conditions with respect to heat radiation.

(7) The light transmission capacity of the optical fiber is increased.

(8) By the alternately laminated multi-layer film, the core can be protected against degradation owing to water.

(9) Because Ge is used as one layer within the alternately laminated multi-layer film, the fiber core cannot be degraded or decomposed.

(l0) Costs can be saved compared with the case where the whole surface of the fiber is coated with an alternately laminated multi-layer film having a uniform number of layers.

(ll) Because the intermediate portion as well as each of the end portions may be coated with an alternating film formed by lamination of at least one repetition cycle, light absorbers cannot be in direct contact with the fiber core. Accordingly, the light transmission characteristic is excellent in stability compared with the prior art case where only the end portions are coated.

(l2) In the optical fiber incorporating a metal layer, leakage of light out of the outer circumference of the optical fiber is small in comparison with an optical fiber provided with only the alternately laminated multi-layer film clad.

Fig. 27 is a graph showing a radial distribution of density of light power in a cross section of the optical fiber with a metal according to the present invention. The light power in the outer circumferential surface of the optical fiber is zero because the light is reflected back by the metal layer.

Therefore, the amount of light power which can be transmitted is further increased.

(l3) The temperature rise of the terminal fixing portion is less because no light power leaks out of the optical fiber. Therefore, laser damage hardly occurs in the terminal fixing portion.

(l4) The power of light reaching the metal layer has been reduced by the existence of the alternately laminated multi-layer film clad. Therefore, the light of such reduced power as described above can be perfectly reflected by the metal layer even if the metal layer is thin.

In an optical fiber provided with a metal layer formed directly on the circumference of a core, there has been such a disadvantage that strong light impinges onto the metal layer so that the metal layer cannot reflect the light perfectly and absorbs a part of the light to raise the metal temperature. In the optical fiber according to the present invention, however, the alternately laminated multi-layer film is provided, so that the foregoing disadvantage can be eliminated.

(l5) In the case where a silver halide crystal or a thallium halide crystal is used as the material of the optical fiber core, the core material may be decomposed by ultraviolet light or visible light when the light enters.

In the optical fiber however, there is provided the metal layer through which visible light as well as ultraviolet light is not allowed to pass. Therefore, the core material is never decomposed due to time aging even when the core material is made of a silver halide crystal or a thallium halide crystal.

The optical fiber according to the invention may be used for example, for transmitting a $CO_2$ laser beam, as a light transmission line for a laser medically treating equipement or a laser processing machine.

The optical fiber according to the present invention can be used as an optical fiber for transmitting carbon dioxide laser light for various purposes, such as a transmission line for laser medicine or a transmission line for laser machining.

## Claims

1. An optical fiber, comprising

an optical fiber core; and

an optical fiber cladding covering outer circumferential surfaces of said core at least at end portions of said core, said cladding comprising at least two stacked lamination pairs of a first layer of a first material comprising lead fluoride and a second layer of a second material comprising silver halide or germanium of predetermined thicknesses and differing refractive indices.

2. The optical fiber of claim 1, wherein said core substantially consists of one member selected from the group consisting of a thallium chloride crystal, a thallium bromide crystal, a thallium iodide crystal and mixed crystals thereof.

3. The optical fiber of claim 1, wherein said core substantially consists of one member selected from the group consisting of a silver chloride crystal, a silver bromide crystal and mixed crystals thereof.

4. The optical fiber of claim 1, wherein said core substantially consists of one member selected from the group consisting of a cesium iodide crystal, a cesium bromide crystal and mixed crystals thereof.

5. The optical fiber of any of claims 1 to 4 wherein said cladding is provided only at end portions of said core.

6. The optical fiber of any of claims 1 to 5, wherein said second material substantially consists of germanium, said thickness of said first layer is not larger than 3.3 $\mu$m and said thickness of said second layer is not larger than 1.45 $\mu$m.

7. The optical fiber of any of claims 1 to 5, wherein said second material substantially consists of silver bromide, said thickness of said first layer is in the range of 0.3 - 7.8 $\mu$m and said thickness of said second layer is in the range of 0.6 - 3.1 $\mu$m.

**Revendications**

1. Fibre optique, comprenant :
   une âme de libre optique, et
   un revêtement de fibre optique recouvrant les surfaces circonférentielles externes de l'âme au moins dans les parties d'extrémité de l'âme, le revêtement comprenant au moins deux paires de couches empilées comprenant une première couche d'un premier matériau contenant du fluorure de plomb et une seconde couche d'un second matériau contenant un halogénure d'argent ou du germanium, avec des épaisseurs prédéterminées et des indices de réfraction qui diffèrent.

2. Fibre optique selon le revendication 1, dans laquelle l'âme est formée essentiellement d'un organe choisi dans le groupe comprenant un cristal de chlorure de thallium, un cristal de bromure de thallium, un cristal d'iodure de thallium et leurs cristaux mixtes.

3. Fibre optique selon la revendication 1, dans laquelle l'âme est formée essentiellement d'un organe choisi dans le groupe qui comprend un cristal de chlorure d'argent, un cristal de bromure d'argent et leurs cristaux mixtes.

4. Fibre optique selon la revendication 1, dans laquelle l'âme est formée essentiellement d'un organe choisi dans le groupe qui comprend un cristal d'iodure de césium, un cristal de bromure de césium et leurs cristaux mixtes.

5. Fibre optique selon l'une quelconque des revendications 1 à 4, dans laquelle le revêtement est placé uniquement sur les parties d'extrémité de l'âme.

6. Fibre optique selon l'une quelconque des revendications 1 à 5, dans laquelle le second matériau est essentiellement constitué de germanium, l'épaisseur de la première couche ne dépasse pas 3,3 $\mu$m, et l'épaisseur de la seconde couche ne dépasse pas 1,45 $\mu$m.

7. Fibre optique selon l'une quelconque des revendications 1 à 5, dans laquelle le second matériau est formé essentiellement de bromure d'argent, l'épaisseur de la première couche est comprise entre 0,3 et 7,8 $\mu$m, et l'épaisseur de la seconde couche est comprise entre 0,6 et 3,1 $\mu$m.

**Patentansprüche**

30

1. Optische Faser, umfassend einen optischen Faserkern und eine optische Faserumhüllung, die die äußeren Umfangsoberflächen des Kerns wenigstens an den Endteilen des Kerns bedeckt, wobei die Umhüllung wenigstens zwei aufeinander angeordnete Laminationspaare aus einer ersten Schicht eines ersten Materials, umfassend Bleifluorid, und einer zweiten Schicht eines zweiten Materials, umfassend Silberhalogenid oder Germanium, mit vorbestimmten Dicken und verschiedenen Brechungsindices umfaßt.

2. Optische Faser nach Anspruch 1, worin der Kern im wesentlichen aus einem Teil, gewählt aus der Gruppe, bestehend aus einem Thalliumchloridkristall, einem Thalliumbromidkristall, einem Thalliumjodidkristall und gemischten Kristallen daraus, besteht.

3. Optische Faser nach Anspruch 1, worin der Kern im wesentlichen aus einem Teil, gewählt aus der Gruppe, bestehend aus einem Silberchloridkristall, einem Silberbromidkristall und gemischten Kristallen daraus, besteht.

4. Optische Faser nach Anspruch 1, worin der Kern im wesentlichen aus einem Teil, gewählt aus der Gruppe, bestehend aus einem Cäsiumjodidkristall, einem Cäsiumbromidkristall und gemischten Kristallen daraus, besteht.

5. Optische Faser nach einem der Ansprüche 1 bis 4, worin die Umhüllung nur an den Teilen des Kerns vorgesehen ist.

6. Optische Faser nach einem der Ansprüche 1 bis 5, worin das zweite Material im wesentlichen aus Germanium besteht, die Dicke der ersten Schicht nicht größer als 3,3 $\mu$m ist und die Dicke der zweiten Schicht nicht größer als 1,45 $\mu$m ist.

7. Optische Faser nach einem der Ansprüche 1 bis 5, worin das zweite Material im wesentlichen aus Silberbromid besteht, die Dicke der ersten Schicht im Bereich von 0,3 bis 7,8 $\mu$m liegt und die Dicke der zweiten Schicht im Bereich von 0,6 bis 3,1 $\mu$m liegt.

FIG. 1

FIG. 2

FIG. 3

FIG. 4

CLADDING

θ

CORE

CLADDING

FIG. 5

CLADDING

LEAKAGE

CORE

FIELD
INTENSITY

FIG. 6

CLADDING

CORE

θ

CLADDING

FIG. 7

RADIATION MODE

CLADDING

θ

CORE

EP 0 234 233 B1

## FIG. 8

## FIG. 9

## FIG. 10

EP 0 234 233 B1

## FIG. 11

MULTI-LAYERS

BOUNDARY

## FIG. 12

34

## FIG. 13

LEAF SHAPE WHICH PROVIDES S = -1

$$S = \cos X \cos Y - \gamma \sin X \sin Y$$
$$(\gamma > 1)$$

UPPER BRANCH

LOWER BRANCH

$G(\frac{\pi}{2}, \frac{\pi}{2})$

## FIG. 14(a)

SINGLE LAYER REFLECTION

## FIG. 14(b)

THREE LAYER REFLECTION

35

FIG. 15

RANGE OF THICKNESS OF ALTERNATE MULTI-
LAYERS PbF₂/Ge
RANGE HAVING S<-1 ATTENUATION RESOLUTION

*FIG. 16*

1   2   3

*FIG. 17*

*FIG. 18*

5cm                    5cm

FIG. 19

RANGE OF THICKNESS OF ALTERNATE MULTI-LAYERS PbF₂/AGBr
RANGE HAVING S< -1 ATTENUATION RESOLUTION

*FIG. 22*

*FIG. 20*

*FIG. 21*

## FIG. 23

## FIG. 24

## FIG. 25

## FIG. 26

## FIG. 27

OPTICAL FIBER POWER DISTRIBUTION
IN THE PRESENT INVENTION

OPTICAL POWER DENSITY

OUTER PERIPHERAL
SURFACE

DISTANCE IN RADIAL
DIRECTION OF OPTICAL
FIBER

CORE
MULTIPLE LAYER CLAD
METAL LAYER

## FIG. 28

# FIG. 29

# FIG. 30

OPTICAL POWER DENSITY

POWER DISTRIBUTION IN OPTICAL FIBER
HAVING MULTIPLE LAYER CLAD WITHOUT
METAL LAYER

NOT "ZERO" AT THE
OUTER PERIPHERY

DISTANCE IN RADIAL
DIRECTION OF OPTICAL
FIBER

CORE

MULTIPLE
LAYER
CLADDING

OUTER PERIPHERAL
SURFACE OF THE
FIBER